# EUROPEAN PATENT APPLICATION

(11) **EP 4 725 740 A1**
(43) Date of publication of application: **15.04.2026**
(21) Application number: 24870061.9
(22) Date of filing: 26.07.2024
(51) Int. Cl.: B60L 1/00

(54) **ALL-IN-ONE ONBOARD POWER SUPPLY APPARATUS, ELECTRIC MOTOR CONTROLLER, AND POWER ASSEMBLY**

(30) Priority: 27.09.2023 CN 202311282471
(71) Applicant: Huawei Digital Power Technologies Co., Ltd., Shenzhen, Guangdong 518043 (CN)
(72) Inventor: WANG, Tianyu, Shenzhen, Guangdong 518043 (CN)
(74) Representative: Maiwald GmbH
(86) International application number: PCT/CN2024/107921
(87) International publication number: WO 2025/066507

(57) **Abstract**

This application provides an all-in-one vehicle-mounted power supply apparatus, a motor control unit, and a powertrain, to integrate a power control circuit of a compressor and a power control circuit of a heater, so as to reduce hardware costs. The vehicle-mounted power supply apparatus includes a housing, and a power conversion circuit, a switch module, and a compressor motor drive circuit that are accommodated in the housing. A compressor motor interface and a heating module interface are disposed on a surface of the housing. The power conversion circuit is configured to receive an alternating current and output a first direct current to charge a power battery or supply power to the compressor motor drive circuit. The compressor motor drive circuit includes three bridge arms connected in parallel, two ends of the three bridge arms are configured to receive the first direct current or receive power supplied by the power battery, a bridge arm midpoint of each bridge arm is configured to connect to one phase winding of a compressor motor through the compressor motor interface, a bridge arm midpoint of at least one bridge arm is configured to drive a heating module through the heating module interface, and the switch module is configured to connect or disconnect the bridge arm midpoint of the at least one bridge arm to/from the heating module.

## Description

### CROSS-REFERENCE TO RELATED APPLICATIONS

This application claims priority to Chinese Patent Application No. 202311282471.1, filed with the China National Intellectual Property Administration on September 27, 2023 and entitled "ALL-IN-ONE VEHICLE-MOUNTED POWER SUPPLY APPARATUS, MOTOR CONTROL UNIT, AND POWERTRAIN", which is incorporated herein by reference in its entirety.

### TECHNICAL FIELD

This application relates to the field of new energy vehicle technologies, and in particular, to an all-in-one vehicle-mounted power supply apparatus, a motor control unit, and a powertrain.

### BACKGROUND

Currently, two products: an air conditioner compressor and a heater, of a new energy vehicle, are two components independent of each other, and the two components each have sub-components such as a power control circuit, a sampling circuit, a control circuit, and a communication circuit that are independent of each other. The sub-components of the two components tend to be integrated into a board. However, mostly, sub-components such as the sampling circuit, the communication circuit, and the control circuit are integrated, and the power control circuits are independent of each other.

A power control circuit of a heater commonly used in the industry mainly uses, for example, an insulated gate bipolar transistor (insulated gate bipolar transistor, IGBT) or a similar controllable semiconductor component, and a high-frequency switch to control a duty cycle or a switching period to adjust a heating power, so as to precisely control the heating power. For power control on the air conditioner compressor, a three-phase full-bridge inverter circuit is mainly used as a power control circuit, to implement frequency conversion control on the air conditioner compressor.

Currently, the power control circuit of the air conditioner compressor and the power control circuit of the heater are independent of each other, and execute different functions. However, the air conditioner compressor and the heater usually do not work together, and may be required to work together in some scenarios. As a result, high component waste is caused, and material costs are high. In addition, there are a large quantity of vehicle components and communication nodes, and a large quantity of semiconductor or resistor-capacitor components such as a power transistor, a drive chip, and a sampling chip are used. Consequently, hardware costs of the product cannot be reduced.

### SUMMARY

This application provides an all-in-one vehicle-mounted power supply apparatus, a motor control unit, and a powertrain, to integrate a power control circuit of an air conditioner compressor and a power control circuit of a heater, so as to reduce hardware costs.

According to a first aspect, this application provides an all-in-one vehicle-mounted power supply apparatus. The vehicle-mounted power supply apparatus includes a housing, a power conversion circuit, a switch module, and a compressor motor drive circuit. The housing is configured to accommodate the switch module, the power conversion circuit, and the compressor motor drive circuit. A compressor motor interface and a heating module interface are disposed on a surface of the housing. The power conversion circuit is configured to receive an alternating current and output a first direct current to charge a power battery or supply power to the compressor motor drive circuit. The compressor motor drive circuit includes three bridge arms connected in parallel, two ends of the three bridge arms are configured to receive the first direct current or receive power supplied by the power battery, a bridge arm midpoint of each bridge arm is configured to connect to one phase winding of a compressor motor through the compressor motor interface, a bridge arm midpoint of at least one bridge arm is configured to drive a heating module through the heating module interface, and the switch module is configured to connect or disconnect the bridge arm midpoint of the at least one bridge arm to/from the heating module.

According to the vehicle-mounted power supply apparatus provided in this embodiment of this application, a power control circuit of the compressor motor and a power control circuit of the heating module are integrated, and the three phase bridge arm for power control on the compressor motor are reused, to implement a power control function of the heating module, so that a total quantity of switching transistors in the vehicle-mounted power supply apparatus can be reduced. In addition, a matching circuit module or functional unit such as a freewheeling diode, a drive chip, a sampling circuit, or a heat sink can be reduced, so that an overall volume can be reduced. This helps reduce hardware costs of a product.

In a possible implementation, the heating module includes a plurality of heating cores connected in parallel. One end of each heating core is configured to connect to a bridge arm midpoint of one bridge arm, and the other end of each heating core is configured to connect to one end of the three bridge arms via the switch module. A heat generation power of a corresponding heating core can be independently adjusted by controlling duty cycles of turn-on of half bridge arms connected to a plurality of bridge arm midpoints. The switch module may also include a plurality of switches in a one-to-one correspondence with the plurality of heating cores. One end of each heating core is configured to correspondingly connect to a bridge arm midpoint of one bridge arm via one switch, the other end of each heating core is configured to connect to one end of the three bridge arms, and a quantity of switches is the same as a quantity of heating cores, so that different heating cores can be independently controlled by turning on/off switches connected in series to the heating cores.

In a possible implementation, the heating module includes the plurality of heating cores connected in parallel. One end of the plurality of heating cores is configured to connect to the bridge arm midpoint of the one bridge arm, and the other end of the plurality of heating cores is configured to connect to the one end of the three bridge arms. When the plurality of heating cores are connected to a same bridge arm midpoint, heat generation powers of the plurality of heating cores can be adjusted together by controlling duty cycles of turn-on of half bridge arms connected to the same bridge arm midpoint.

In a possible implementation, the switch module includes the plurality of switches in the one-to-one correspondence with the plurality of heating cores. The one end of each heating core is configured to connect to the bridge arm midpoint of the one bridge arm via the one switch, or the other end of each heating core is configured to connect to the one end of the three bridge arms via one switch. A quantity of switches is the same as a quantity of heating cores, so that different heating cores can be independently controlled by turning on/off switches connected in series to the heating cores.

In a possible implementation, a running mode of the vehicle-mounted power supply apparatus includes a first heating mode, a second heating mode, and an inverter mode. When the vehicle-mounted power supply apparatus runs in the inverter mode, the switch module is turned off to disconnect the heating module from the compressor motor drive circuit, the bridge arm midpoints of the three bridge arms are configured to output a second alternating current to drive the compressor motor, and the compressor motor works independently. When the vehicle-mounted power supply apparatus runs in the first heating mode, the switch module is turned on to connect a heating core connected in series to a turned-on switch to the compressor motor drive circuit, the compressor motor drive circuit is configured to supply power to the heating module, the compressor motor drive circuit does not output a second alternating current, and the heating module works independently. When the vehicle-mounted power supply apparatus runs in the second heating mode, the switch module is turned on to connect the heating core connected in series to the turned-on switch to the compressor motor drive circuit, the compressor motor drive circuit is configured to supply power to the heating module, the bridge arm midpoints of the three bridge arms are configured to output a second alternating current to drive the compressor motor, and the compressor motor and the heating module work together.

In a possible implementation, when the vehicle-mounted power supply apparatus runs in the first heating mode or the second heating mode, the switch module is intermittently turned on. The heat generation powers of the plurality of heating cores can be independently controlled by controlling the half bridge arm to be periodically turned on.

In a possible implementation, when the vehicle-mounted power supply apparatus runs in the first heating mode or the second heating mode, the switch module is periodically turned on, to cooperate with periodic turn-on of the half bridge arm, so as to control the heat generation power in a wider range, and further independently control the plurality of heating cores.

In a possible implementation, duration in which the switch module is turned on in each period is positively correlated with a target heating power of the heating module.

In a possible implementation, when the vehicle-mounted power supply apparatus runs in the second heating mode, in a process in which the bridge arm midpoints of the three bridge arms output the second alternating current, duration in which all upper bridge arms in the three bridge arms are turned on is different from duration in which all lower bridge arms in the three bridge arms are turned on, to control the heat generation power of the heating core.

In a possible implementation, the vehicle-mounted power supply apparatus may further include a drive motor drive circuit. The drive motor drive circuit is configured to receive power supplied by the power battery and output a third alternating current, and the third alternating current is used to drive a drive motor of an electric vehicle.

According to a second aspect, this application provides a motor control unit for an electric vehicle, including a compressor motor drive circuit and a switch module. The compressor motor drive circuit includes three bridge arms connected in parallel, two ends of the three bridge arms are configured to receive a direct current or receive power supplied by a power battery, a bridge arm midpoint of each bridge arm is configured to connect to one phase winding of a compressor motor, a bridge arm midpoint of at least one bridge arm is configured to drive a heating module, and the switch module is configured to connect or disconnect the bridge arm midpoint of the at least one bridge arm to/from the heating module.

According to the motor control unit provided in this embodiment of this application, a power control circuit of the compressor motor and a power control circuit of the heating module are integrated, and the three phase bridge arms for power control on the compressor motor are reused, to implement a power control function of the heating module, so that a total quantity of switching transistors in the motor control unit can be reduced. In addition, a matching circuit module or functional unit such as a freewheeling diode, a drive chip, a sampling circuit, or a heat sink can be reduced, so that an overall volume can be reduced. This helps reduce hardware costs of a product.

In a possible implementation, the heating module includes a plurality of heating cores connected in parallel. One end of each heating core is configured to connect to a bridge arm midpoint of one bridge arm, and the other end of each heating core is configured to connect to one end of the three bridge arms via the switch module. Alternatively, the switch module includes a plurality of switches in a one-to-one correspondence with the plurality of heating cores. One end of each heating core is configured to be correspondingly connected to a bridge arm midpoint of one bridge arm via one switch, and the other end of each heating core is configured to connect to one end of the three bridge arms.

In a possible implementation, the heating module includes the plurality of heating cores connected in parallel. One end of the plurality of heating cores is configured to connect to the bridge arm midpoint of the one bridge arm, and the other end of the plurality of heating cores is configured to connect to the one end of the three bridge arms.

In a possible implementation, the switch module includes the plurality of switches in the one-to-one correspondence with the plurality of heating cores. The one end of each heating core is configured to connect to the bridge arm midpoint of the one bridge arm via the one switch, or the other end of each heating core is configured to connect to the one end of the three bridge arms via one switch.

In a possible implementation, a running mode of the motor control unit includes a first heating mode, a second heating mode, and an inverter mode. When the motor control unit runs in the inverter mode, the switch module is turned off, and the bridge arm midpoints of the three bridge arms are configured to output an alternating current to drive the compressor motor. When the motor control unit runs in the first heating mode, the switch module is turned on, the compressor motor drive circuit is configured to supply power to the heating module, and the compressor motor drive circuit does not output an alternating current. When the motor control unit runs in the second heating mode, the switch module is turned on, the compressor motor drive circuit is configured to supply power to the heating module, and the bridge arm midpoints of the three bridge arms are configured to output an alternating current to drive the compressor motor.

According to a third aspect, this application provides a powertrain. The powertrain includes a compressor motor, a heating module, and the vehicle-mounted power supply apparatus according to the first aspect or the motor control unit according to the second aspect. A compressor motor drive circuit in the vehicle-mounted power supply apparatus or the motor control unit includes three bridge arms connected in parallel, a bridge arm midpoint of each bridge arm is configured to connect to one phase winding of the compressor motor, a bridge arm midpoint of at least one bridge arm is configured to drive the heating module, and a switch module is configured to connect or disconnect the bridge arm midpoint of the at least one bridge arm to/from the heating module.

For technical effect that can be achieved by any possible design in any one of the second aspect and the third aspect, refer to technical effect that can be achieved by any possible design in the first aspect. Details are not described herein again.

### BRIEF DESCRIPTION OF DRAWINGS

FIG. 1a is a diagram of a structure of a powertrain according to an embodiment of this application;
FIG. 1b is a diagram of another structure of a powertrain according to an embodiment of this application;
FIG. 2a is a diagram of a structure of a vehicle-mounted power supply apparatus according to an embodiment of this application;
FIG. 2b is a schematic of a circuit of a vehicle-mounted power supply apparatus according to an embodiment of this application;
FIG. 2c is a schematic of another circuit of a vehicle-mounted power supply apparatus according to an embodiment of this application;
FIG. 3 is a diagram of a structure of a motor control unit according to an embodiment of this application;
FIG. 4a is a schematic of a circuit of a motor control unit according to an embodiment of this application;
FIG. 4b is a schematic of another circuit of a motor control unit according to an embodiment of this application;
FIG. 5a is a schematic of another circuit of a motor control unit according to an embodiment of this application;
FIG. 5b is a schematic of another circuit of a motor control unit according to an embodiment of this application;
FIG. 5c is a schematic of another circuit of a motor control unit according to an embodiment of this application;
FIG. 5d is a schematic of another circuit of a motor control unit according to an embodiment of this application;
FIG. 6a is a schematic of another circuit of a motor control unit according to an embodiment of this application;
FIG. 6b is a schematic of another circuit of a motor control unit according to an embodiment of this application;
FIG. 6c is a schematic of another circuit of a motor control unit according to an embodiment of this application;
FIG. 6d is a schematic of another circuit of a motor control unit according to an embodiment of this application;
FIG. 7a is a schematic of another circuit of a motor control unit according to an embodiment of this application;
FIG. 7b is a schematic of another circuit of a motor control unit according to an embodiment of this application;
FIG. 7c is a schematic of another circuit of a motor control unit according to an embodiment of this application;
FIG. 7d is a schematic of another circuit of a motor control unit according to an embodiment of this application;
FIG. 7e is a schematic of another circuit of a motor control unit according to an embodiment of this application;
FIG. 8a is a schematic of another circuit of a motor control unit according to an embodiment of this application;
FIG. 8b is a schematic of another circuit of a motor control unit according to an embodiment of this application;
FIG. 8c is a schematic of another circuit of a motor control unit according to an embodiment of this application;
FIG. 8d is a schematic of another circuit of a motor control unit according to an embodiment of this application;
FIG. 9 is a schematic of another circuit of a motor control unit according to an embodiment of this application;
FIG. 10 is a schematic of another circuit of a motor control unit according to an embodiment of this application;
FIG. 11 is a diagram of a space vector in an SVPWM technology;
FIG. 12 is a diagram of correspondences between space vectors and on/off states of switching transistors in three phase bridge arms;
FIG. 13 is a diagram of a status of each phase bridge arm and a control signal of each switching transistor in the phase bridge arm; and
FIG. 14 is a diagram of a wave generation control policy of SVPWM.

### DESCRIPTION OF EMBODIMENTS

To make the objectives, technical solutions, and advantages of this application clearer, the following further describes this application in detail with reference to the accompanying drawings. It should be noted that, in descriptions of this application, "at least one" means one or more, and "a plurality of" means two or more. In view of this, in embodiments of this application, "a plurality of' may also be understood as "at least two". The term "and/or" describes an association relationship for describing associated objects and represents that three relationships may exist. For example, A and/or B may represent the following three cases: Only A exists, both A and B exist, and only B exists. In addition, the character "/", unless otherwise specified, generally indicates an "or" relationship between the associated objects. In addition, it should be understood that, in the descriptions of this application, terms such as "first" and "second" are merely used for distinguishing and description, but should not be understood as indicating or implying relative importance, or should not be understood as indicating or implying a sequence.

It is clear that the described embodiments are a part rather than all of embodiments of this application. All other embodiments obtained by a person of ordinary skill in the art based on embodiments of this application without creative efforts shall fall within the protection scope of this application. The technical solutions of this application are further described below in detail with reference to the accompanying drawings.

An electric vehicle generally includes a powertrain and a power battery. The power battery is connected to the powertrain, and the power battery may provide direct current electric energy for the powertrain. The power battery may be, for example, a lithium-ion battery, a lead-acid battery, or a solar battery. A type of the power battery is not limited in this application.

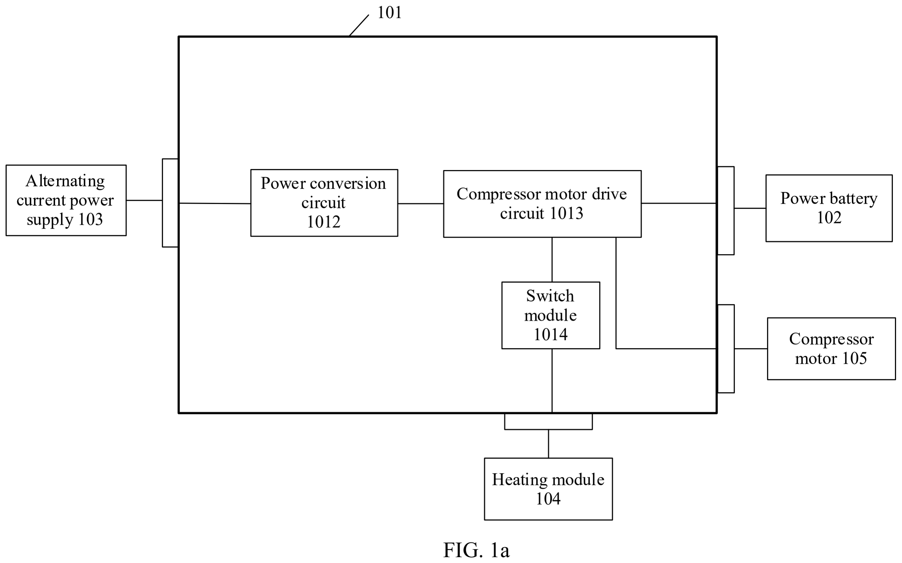

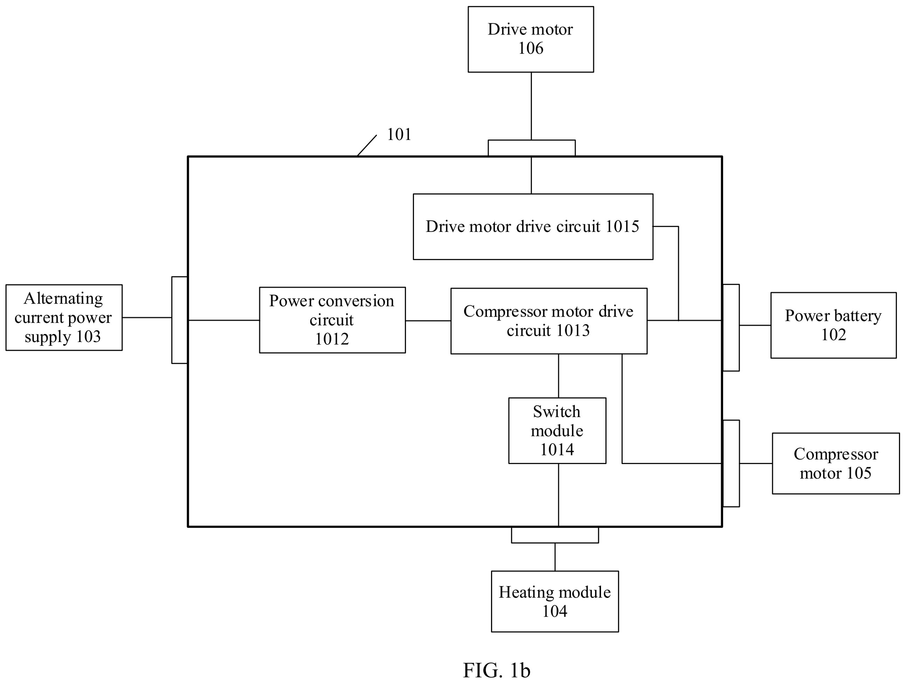

FIG. 1a is a diagram of a structure of a powertrain according to an embodiment of this application, and FIG. 1b is a diagram of another structure of the powertrain according to this embodiment of this application. As shown in FIG. 1a, the powertrain provided in this embodiment of this application may include a vehicle-mounted power supply apparatus 101, a compressor motor 105 driven by the vehicle-mounted power supply apparatus 101, a heating module 104, and the like. The vehicle-mounted power supply apparatus 101 provided in this embodiment of this application may include a power conversion circuit 1012, a compressor motor drive circuit 1013, and a switch module 1014.

As shown in FIG. 1b, the powertrain may further include a drive motor 106 driven by the vehicle-mounted power supply apparatus 101. In this case, the vehicle-mounted power supply apparatus 101 may further include a drive motor drive circuit 1015. The vehicle-mounted power supply apparatus 101 may further include sub-components such as a sampling circuit, a communication circuit, and a controller. A first power supply port of the vehicle-mounted power supply apparatus 101 is connected to an alternating current power supply 103, and a second power supply port of the vehicle-mounted power supply apparatus 101 is connected a power battery 102. An input end of the power conversion circuit 1012 in the vehicle-mounted power supply apparatus 101 is connected to the alternating current power supply 103, an output end of the power conversion circuit 1012 is connected to an input end of the compressor motor drive circuit 1013, and the power conversion circuit 1012 is configured to: receive a first alternating current provided by the alternating current power supply 103, perform conversion, and then output a first direct current. An input end of the compressor motor drive circuit 1013 is further connected to the power battery 102, a first output end of the compressor motor drive circuit 1013 is connected to the compressor motor 105, and a second output end of the compressor motor drive circuit 1013 is connected to the heating module 104 through the switch module 1014. The compressor motor drive circuit 1013 is configured to: receive the first direct current provided by the power conversion circuit 1012 or receive power supplied by the power battery 102, and in a first heating mode, turn on the switch module 1014 to supply power to the heating module 104, or in a second heating mode, turn on the switch module 1014 to supply power to the heating module 104, perform conversion, and then output a second alternating current to drive the compressor motor 105, or in an inverter mode, turn off the switch module 1014, perform conversion, and then output a second alternating current to drive the compressor motor 105. An input end of the drive motor drive circuit 1015 is connected to the power battery 102, an output end of the drive motor drive circuit 1015 is connected to the drive motor 106, and the drive motor drive circuit 1015 is configured to: receive power supplied by the power battery 102, perform conversion, and then output a third alternating current to drive the drive motor 106 of an electric vehicle.

As shown in FIG. 1a and FIG. 1b, the vehicle-mounted power supply apparatus 101 may include a housing (a bold frame in the figure shows the housing). The housing is configured to accommodate the switch module 1014, the power conversion circuit 1012, the compressor motor drive circuit 1013, and the drive motor drive circuit 1015. Interfaces such as an alternating current interface, a direct current interface, a compressor motor interface, a heating module interface, and a drive motor interface are disposed on a surface of the housing. The alternating current power supply 103 is connected to the power conversion circuit 1012 through the alternating current interface, the power battery 102 is connected to the compressor motor drive circuit 1013 through the direct current interface, three phase windings of the compressor motor 105 are connected to the compressor motor drive circuit 1013 through the compressor motor interface, the heating module 104 is connected to the compressor motor drive circuit through the heating module interface, and the drive motor 106 is connected to the drive motor drive circuit 1015 through the drive motor interface.

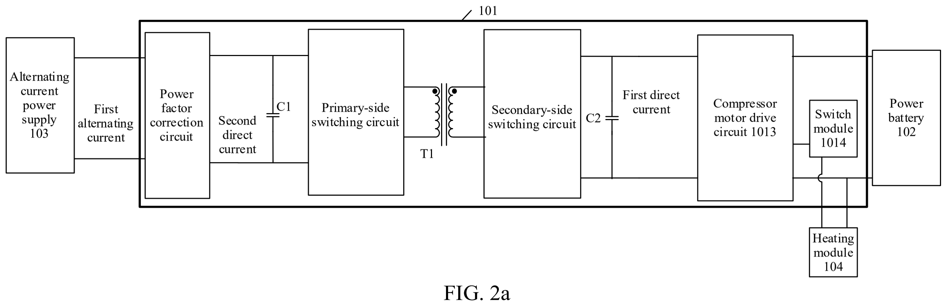

FIG. 2a is a diagram of a structure of a vehicle-mounted power supply apparatus according to an embodiment of this application. As shown in FIG. 2a, a power conversion circuit 1012 includes a bridge arm circuit and a direct current conversion circuit. The bridge arm circuit may be a power factor correction (power factor correction circuit, PFC) circuit, and is configured to: receive a first alternating current provided by an alternating current power supply 103, perform conversion, and then output a second direct current. The direct current conversion circuit may specifically include a primary-side switching circuit, a transformer T1, and a secondary-side switching circuit that are connected in series. An input end of the primary-side switching circuit is connected to an output end of the PFC circuit, and an output end of the primary-side switching circuit is connected to a primary-side winding of the transformer T1. An input end of the secondary-side switching circuit is connected to a secondary-side winding of the transformer T2, and an output end of the secondary-side switching circuit is connected to an input end of a compressor motor drive circuit 1013. The primary-side switching circuit is configured to: receive the second direct current, perform conversion, and then transmit a current obtained through the conversion to the transformer T1. A current obtained through voltage conversion by the transformer T1 is transmitted to the secondary-side switching circuit. The secondary-side switching circuit is configured to output a first direct current.

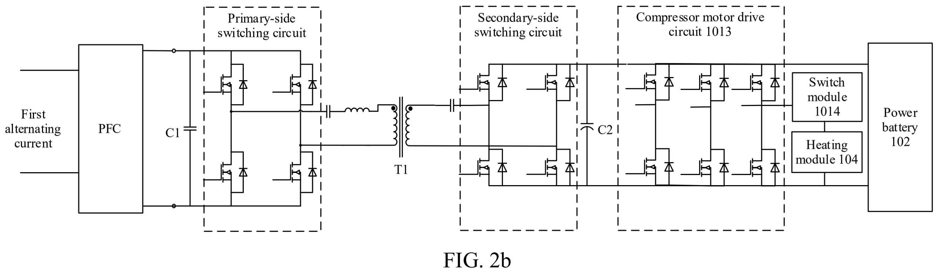

FIG. 2b is a schematic of a circuit of the vehicle-mounted power supply apparatus according to this embodiment of this application. As shown in FIG. 2b, both the primary-side switching circuit and the secondary-side switching circuit may be full-bridge circuits, or at least one of the primary-side switching circuit and the secondary-side switching circuit may be a half-bridge circuit. This is not limited herein. As shown in FIG. 2b, the compressor motor drive circuit 1013 may include three bridge arms connected in parallel, each bridge arm includes a lower bridge switching transistor and a lower bridge switching transistor connected in series, and both the upper bridge switching transistor and the lower bridge switching transistor may be considered as half bridge arms. An input end of the compressor motor drive circuit 1013 is connected to a power battery 102 through a direct current bus, the input end of the compressor motor drive circuit 1013 is further connected to an output end of the power conversion circuit 1012 through the direct current bus, the upper bridge switching transistor and the lower bridge switching transistor in each bridge arm of the compressor motor drive circuit 1013 are connected in series between negative direct current buses of positive direct current buses, and two ends of the three bridge arms of the compressor motor drive circuit 1013 are configured to receive the first direct current provided by the power conversion circuit 1012 or receive power supplied by the power battery 102. A connection point between the upper bridge switching transistor and the lower bridge switching transistor of the compressor motor drive circuit 1013 may be used as a bridge arm midpoint, one bridge arm midpoint of the compressor motor drive circuit 1013 is connected to one phase winding of the compressor motor 105, bridge arm midpoints of the three bridge arms of the compressor motor drive circuit 1013 are respectively connected to three phase windings of the compressor motor 105, and the bridge arm midpoints of the three bridge arms of the compressor motor drive circuit 1013 are configured to output a second alternating current. Specifically, the bridge arm midpoints of the three bridge arms of the compressor motor drive circuit 1013 may be connected to the three phase windings of the compressor motor through the compressor motor interface. A bridge arm midpoint of at least one bridge arm of the compressor motor drive circuit 1013 is connected to one end of the three bridge arms via a switch module 1014 and a heating module 104 that are connected in series, in other words, the bridge arm midpoint of the at least one bridge arm and the one end of the three bridge arms are configured to connect to the heating module 104 through the heating module interface. Specifically, the bridge arm midpoint of at least one bridge arm of the compressor motor drive circuit 1013 may be connected to the positive direct current bus via the switch module 1014 and the heating module 104 that are connected in series; or the bridge arm midpoint of at least one bridge arm of the compressor motor drive circuit 1013 may be connected to the negative direct current bus via the switch module 1014 and the heating module 104 that are connected in series.

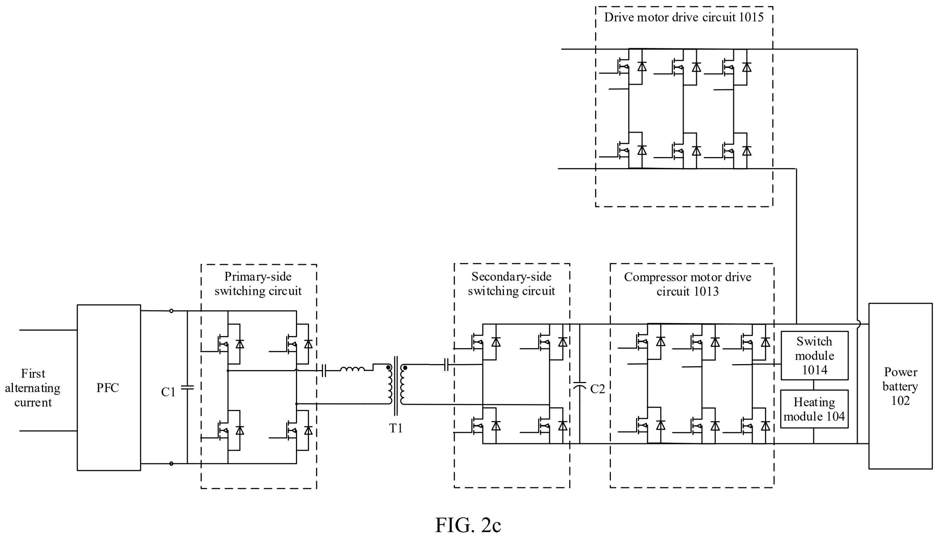

FIG. 2c is a schematic of another circuit of the vehicle-mounted power supply apparatus according to this embodiment of this application. As shown in FIG. 2c, a drive motor drive circuit 1015 may also include three bridge arms connected in parallel, and each bridge arm may also include a lower bridge switching transistor and a lower bridge switching transistor connected in series. An input end of the drive motor drive circuit 1015 is connected to the power battery 102 through a direct current bus, the upper bridge switching transistor and the lower bridge switching transistor in each bridge arm of the drive motor drive circuit 1015 are connected in series between negative direct current buses of positive direct current buses, and two ends of the three bridge arms of the drive motor drive circuit 1015 are configured to receive power supplied by the power battery 102. A connection point between the upper bridge switching transistor and the lower bridge switching transistor of the drive motor drive circuit 1015 may be used as a bridge arm midpoint, bridge arm midpoints of the three bridge arms of the drive motor drive circuit 1015 are respectively connected to three phase windings of a drive motor 106, and the bridge arm midpoints of the three bridge arms of the drive motor drive circuit 1015 are configured to output a third alternating current.

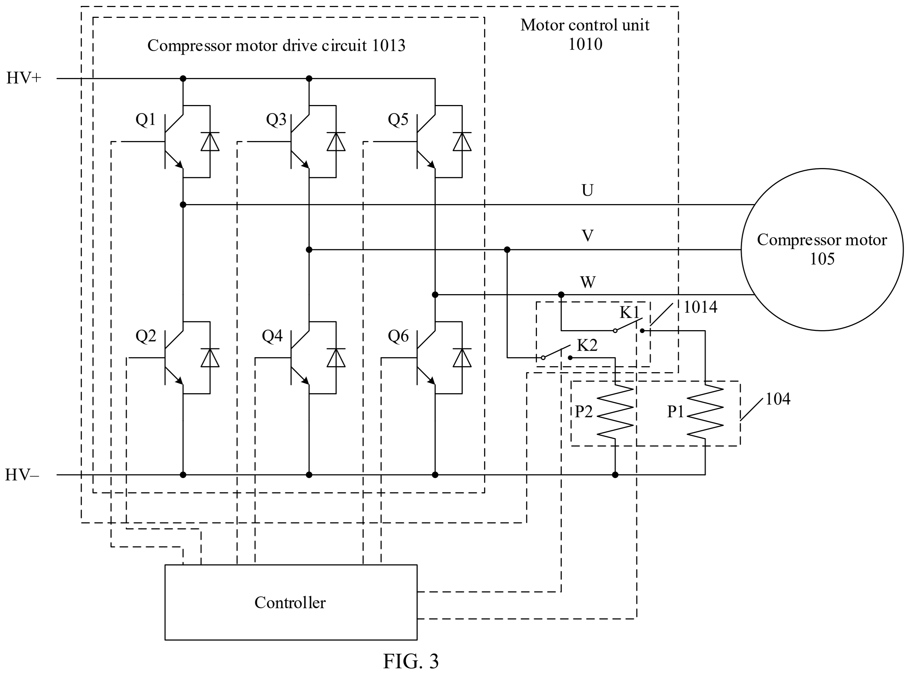

FIG. 3 is a diagram of a structure of a motor control unit according to an embodiment of this application. As shown in FIG. 3, a motor control unit 1010 provided in this embodiment of this application may include the compressor motor drive circuit 1013 that is in the vehicle-mounted power supply apparatus 101 and that is configured to drive the compressor motor 105 and the heating module 104, and the switch module 1014 connected in series to the heating module 104. The compressor motor drive circuit 1013 includes three bridge arms connected in parallel, and the three bridge arms included in the compressor motor drive circuit 1013 may be denoted as a U-phase bridge arm, a V-phase bridge arm, and a W-phase bridge arm. In the U-phase bridge arm, an upper bridge switching transistor is a switching transistor Q1, and a lower bridge switching transistor is a switching transistor Q2; in the V-phase bridge arm, an upper bridge switching transistor is a switching transistor Q3, and a lower bridge switching transistor is a switching transistor Q4; and in the W-phase bridge arm, an upper bridge switching transistor is a switching transistor Q5, and a lower bridge switching transistor is a switching transistor Q6. One end of each bridge arm is connected to a positive direct current bus HV+, that is, a collector of the switching transistor Q1, a collector of the switching transistor Q3, and a collector of the switching transistor Q5 are connected to the positive direct current bus HV+, the other end of each bridge arm is connected to a negative direct current bus HV-, that is, an emitter of the switching transistor Q2, an emitter of the switching transistor Q4, and an emitter of the switching transistor Q6 are connected to a negative direct current bus HV-, and the two ends of the three bridge arms are configured to receive a direct current (namely, the first direct current provided by the power conversion circuit 1012) or receive the power supplied by the power battery 102. A bridge arm midpoint of each bridge arm is connected to a corresponding winding of the compressor motor 105, that is, an emitter of the switching transistor Q1 and a collector of the switching transistor Q2 are connected to a U-phase winding of the compressor motor 105, an emitter of the switching transistor Q3 and a collector of the switching transistor Q4 are connected to a V-phase winding of the compressor motor 105, and an emitter of the switching transistor Q5 and a collector of the switching transistor Q6 are connected to a W-phase winding of the compressor motor 105, and bridge arm midpoints of the three bridge arms are configured to output an alternating current to drive the compressor motor 105. The bridge arm midpoint of at least one bridge arm of the compressor motor drive circuit 1013 is connected to one end of the three bridge arms via the switch module 1014 and the heating module 104 that are connected in series. Specifically, the bridge arm midpoint of the at least one bridge arm of the compressor motor drive circuit 1013 may be connected to the positive direct current bus HV+ via the switch module 1014 and the heating module 104 that are connected in series, or as shown in FIG. 3, the bridge arm midpoint of the at least one bridge arm of the compressor motor drive circuit 1013 may be connected to the negative direct current bus HV- via the switch module 1014 and the heating module 104 that are connected in series.

According to the foregoing description, a connection relationship and relative positions of an upper bridge switching transistor and a lower bridge switching transistor in one bridge arm can be clarified. Optionally, the upper bridge switching transistor may be an insulated gate bipolar transistor (insulated gate bipolar transistor, IGBT) or an anti-parallel diode thereof, a metal-oxide-semiconductor field-effect transistor (metal-oxide-semiconductor field-effect transistor, MOSFET), or the like. A specific structure inside the upper bridge switching transistor is not specifically limited in this application. Optionally, the lower bridge switching transistor may be an IGBT or an anti-parallel diode thereof, or a MOSFET. A specific structure inside the lower bridge switching transistor is not specifically limited in this application.

As shown in FIG. 3, the motor control unit 1010 may further include a controller. The controller is separately connected to control electrodes of the upper bridge switching transistors and the lower bridge switching transistors of the three bridge arms, and the controller is connected to a control electrode of a switch in the switch module. The controller controls on/off states of the upper bridge switching transistors and the lower bridge switching transistors in the three bridge arms and an on/off state of the switch in the switch module, to control a running mode of the motor control unit 1010. The motor control unit 1010 supports a scenario in which the compressor motor 105 is controlled to work independently. In this case, the controller controls the motor control unit 1010 to run in the inverter mode. The motor control unit 1010 further supports a scenario in which the heating module 104 is controlled to work independently. In this case, the controller controls the motor control unit 1010 to run in the first heating mode. The motor control unit 1010 also supports a scenario in which the compressor motor and the heating module are controlled to work together. In this case, the controller controls the motor control unit 1010 to run in the second heating mode.

The following describes in detail the compressor motor drive circuit 1013 in the motor control unit 1010 and the vehicle-mounted power supply apparatus 101, and a specific connection relationship between the heating module 104 and the switch module 1014.

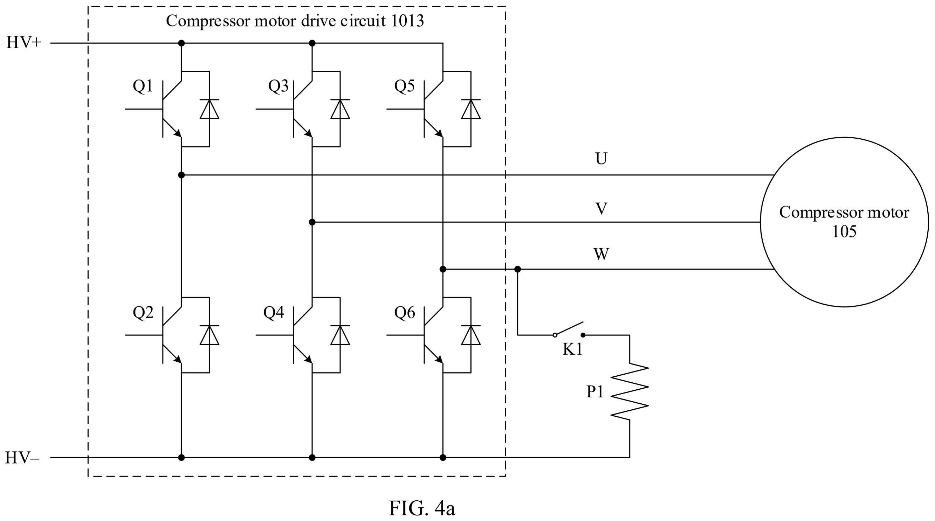

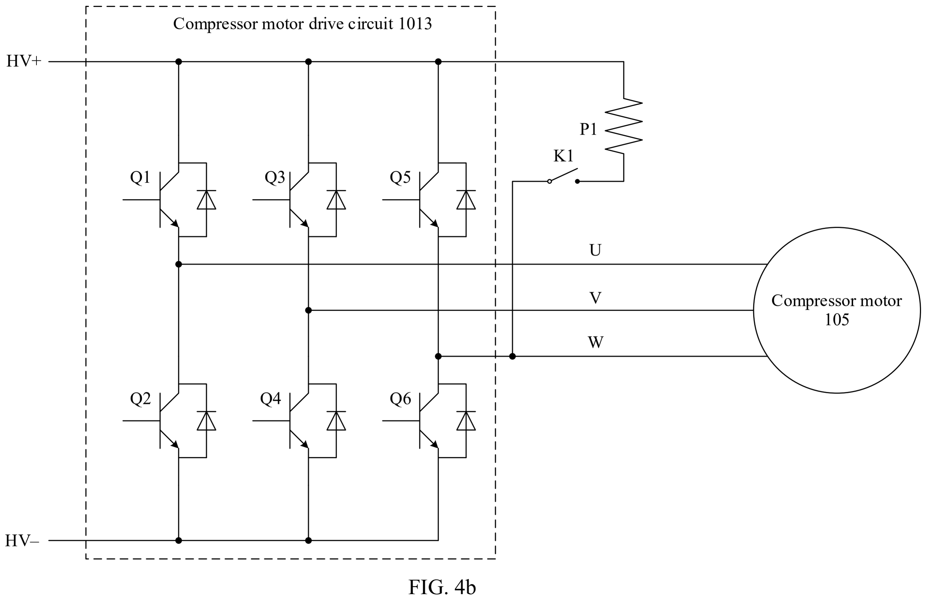

FIG. 4a is a schematic of a circuit of the motor control unit according to this embodiment of this application, and FIG. 4b is a schematic of another circuit of the motor control unit according to this embodiment of this application. As shown in FIG. 4a and FIG. 4b, the heating module 104 connected to the motor control unit 1010 may include one heating core, denoted as a first heating core P1. Correspondingly, the switch module 1014 includes one switch: a first switch K1. The first switch K1 and the first heating core P1 are disposed in series. Refer to FIG. 4a. One end of the first switch K1 and the first heating core P1 that are disposed in series may be connected to the negative direct current bus HV-, and the other end of the first switch K1 and the first heating core P1 that are disposed in series may be connected to any bridge arm midpoint. Refer to FIG. 4b. One end of the first switch K1 and the first heating core P1 that are disposed in series may alternatively be connected to the positive direct current bus HV+, and the other end of the first switch K1 and the first heating core P1 that are disposed in series may be connected to any bridge arm midpoint. Both FIG. 4a and FIG. 4b show that the other end of the first switch K1 and the first heating core P1 that are disposed in series is connected to a bridge arm midpoint of the W-phase bridge arm.

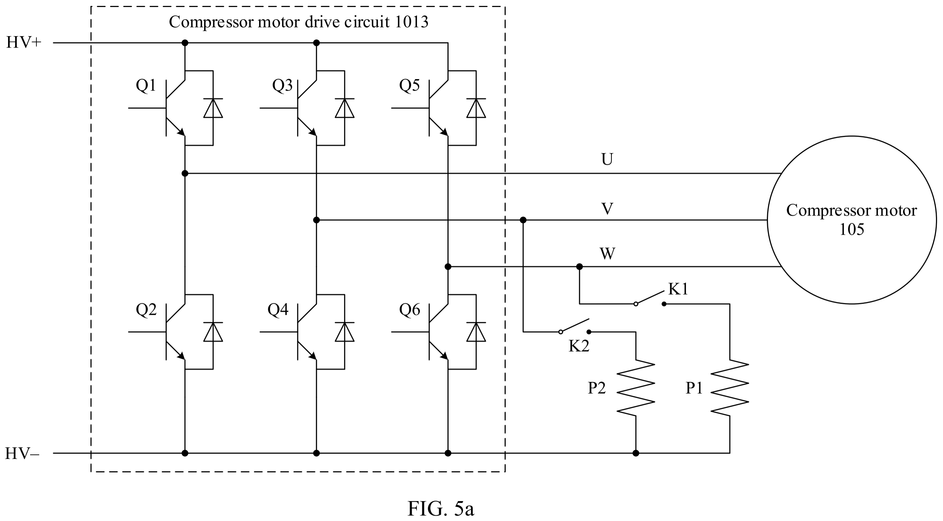

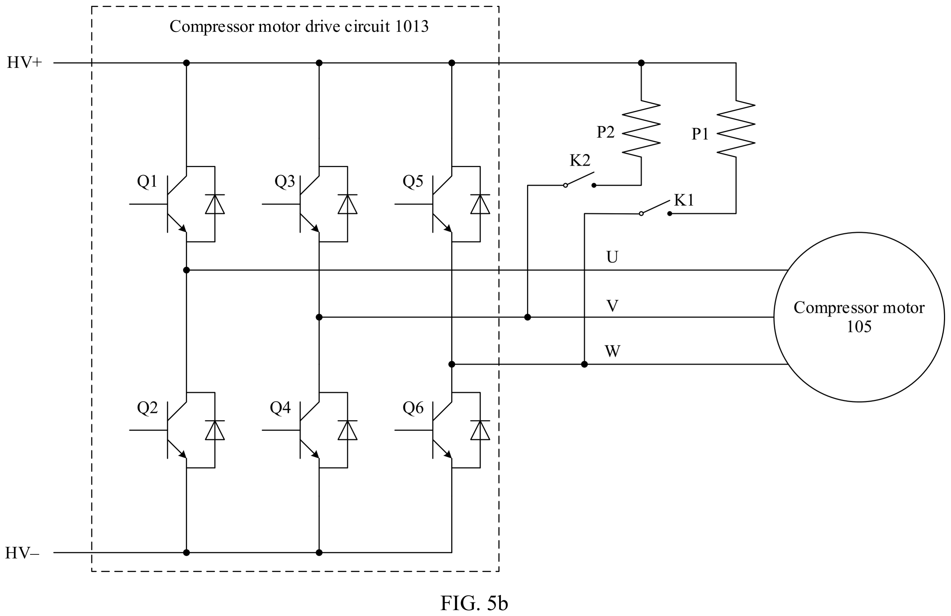

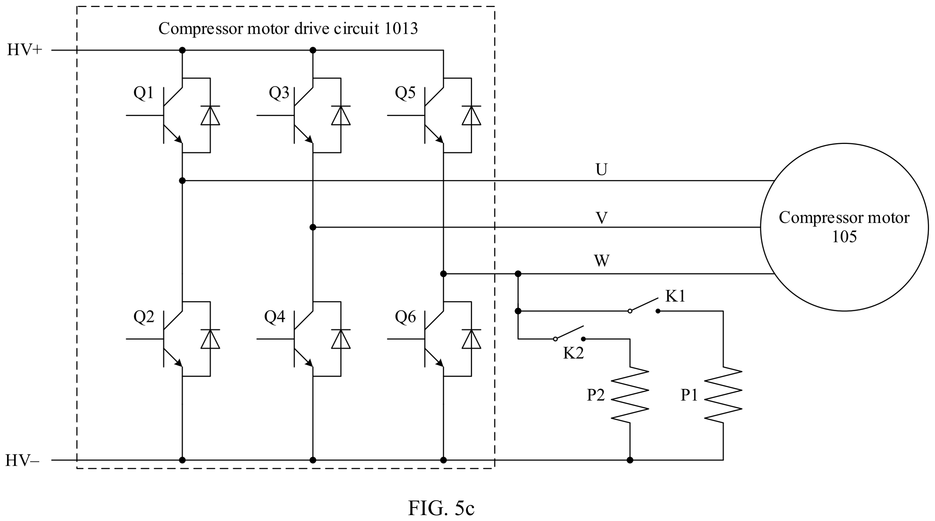

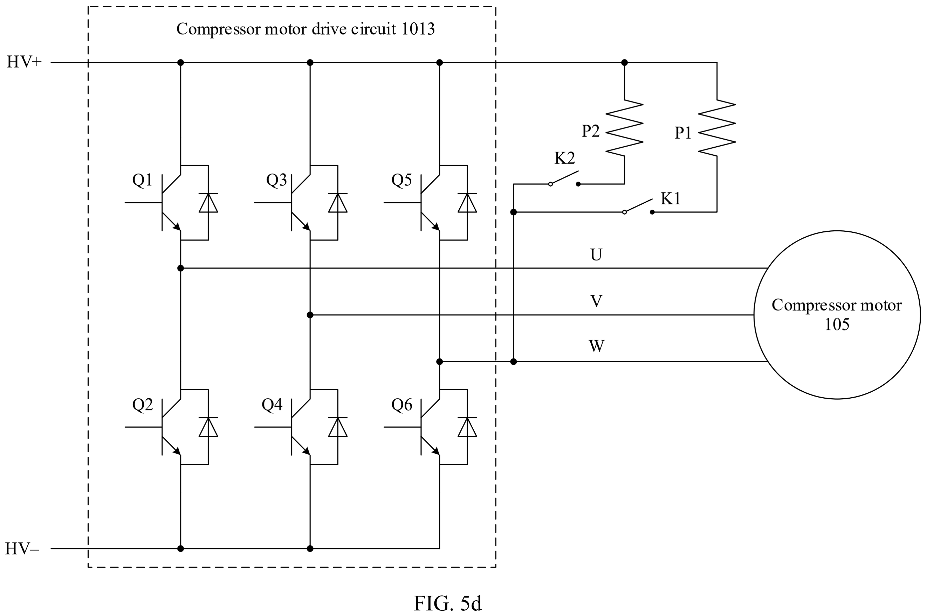

FIG. 5a is a schematic of another circuit of the motor control unit according to this embodiment of this application, FIG. 5b is a schematic of another circuit of the motor control unit according to this embodiment of this application, FIG. 5c is a schematic of another circuit of the motor control unit according to this embodiment of this application, and FIG. 5d is a schematic of another circuit of the motor control unit according to this embodiment of this application. As shown in FIG. 5a to FIG. 5d, the heating module 104 connected to the motor control unit 1010 may include two heating cores, denoted as a first heating core P1 and a second heating core P2. Correspondingly, the switch module 1014 includes two switches: a first switch K1 and a second switch K2. The first switch K1 and the first heating core P1 are disposed in series, and the second switch K2 and the second heating core P2 are disposed in series. Refer to FIG. 5a and FIG. 5c. One end of the first switch K1 and the first heating core P1 that are disposed in series may be connected to the negative direct current bus HV-, and the other end of the first switch K1 and the first heating core P1 that are disposed in series may be connected to any bridge arm midpoint. Similarly, one end of the second switch K2 and the second heating core P2 that are disposed in series may be connected to the negative direct current bus HV-, and the other end of the second switch K2 and the second heating core P2 that are disposed in series may be connected to any bridge arm midpoint. Refer to FIG. 5b and FIG. 5d. One end of the first switch K1 and the first heating core P1 that are disposed in series may alternatively be connected to the positive direct current bus HV+, the other end of the first switch K1 and the first heating core P1 that are disposed in series may be connected to any bridge arm midpoint. Similarly, one end of the second switch K2 and the second heating core P2 that are disposed in series may be connected to the positive direct current bus HV+, and the other end of the second switch K2 and the second heating core P2 that are disposed in series may be connected to any bridge arm midpoint. Refer to FIG. 5a and FIG. 5b. The other end of the first switch K1 and the first heating core P1 that are disposed in series and the other end of the second switch K2 and the second heating core P2 that are disposed in series may be connected to different bridge arm midpoints. Both FIG. 5a and FIG. 5b show that the other end of the first switch K1 and the first heating core P1 that are disposed in series is connected to a bridge arm midpoint of the W-phase bridge arm and the other end of the second switch K2 and the second heating core P2 that are disposed in series is connected to a bridge arm midpoint of the V-phase bridge arm. Refer to FIG. 5c and FIG. 5d. The other end of the first switch K1 and the first heating core P1 that are disposed in series and the other end of the second switch K2 and the second heating core P2 that are disposed in series may be connected to a same bridge arm midpoint. Both FIG. 5c and FIG. 5d show that the other end of the first switch K1 and the first heating core P1 that are disposed in series is connected to the bridge arm midpoint of the W-phase bridge arm and the other end of the second switch K2 and the second heating core P2 that are disposed in series is connected to the bridge arm midpoint of the W-phase bridge arm.

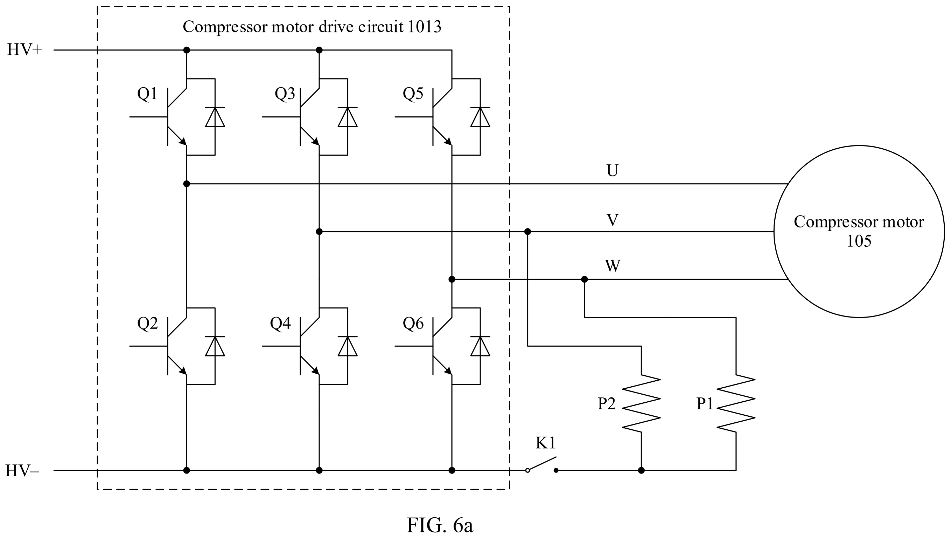

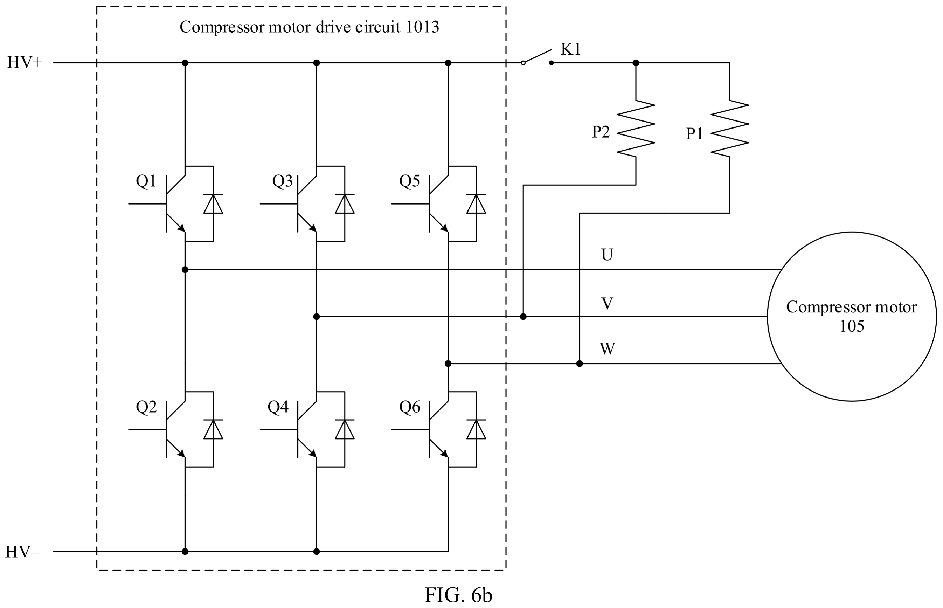

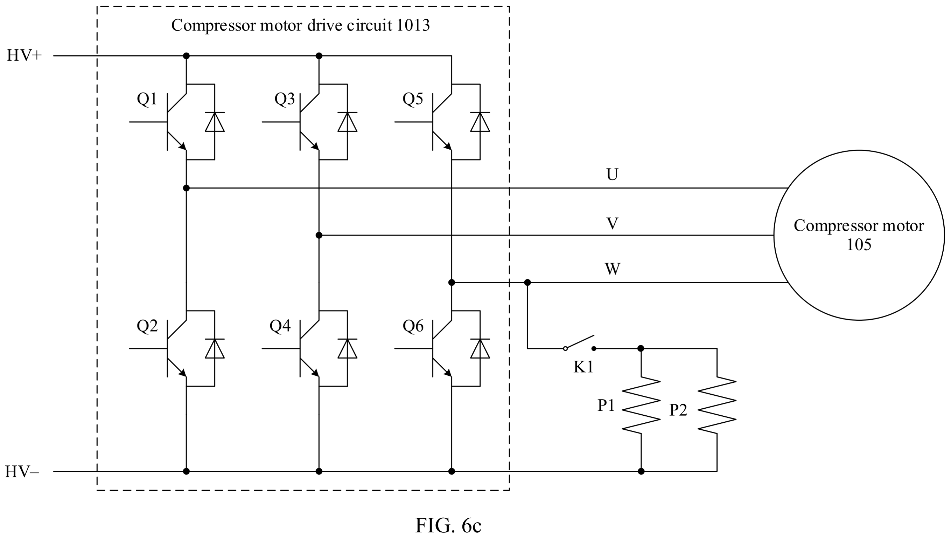

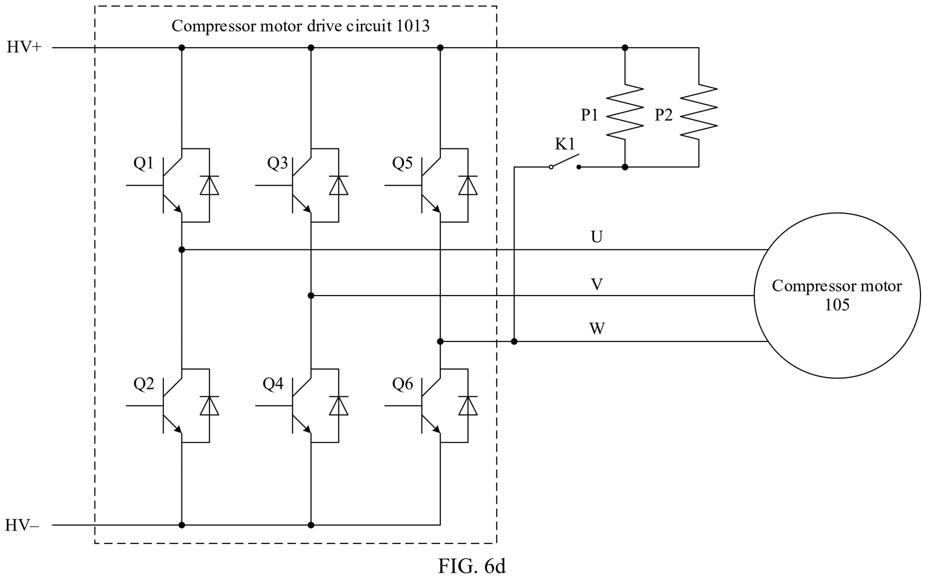

FIG. 6a is a schematic of another circuit of the motor control unit according to this embodiment of this application, FIG. 6b is a schematic of another circuit of the motor control unit according to this embodiment of this application, FIG. 6c is a schematic of another circuit of the motor control unit according to this embodiment of this application, and FIG. 6d is a schematic of another circuit of the motor control unit according to this embodiment of this application. As shown in FIG. 6a to FIG. 6d, the heating module 104 connected to the motor control unit 1010 may include two heating cores, denoted as a first heating core P1 and a second heating core P2. Correspondingly, the switch module 1014 includes one switch: a first switch K1. The first switch K1 and the first heating core P1 are disposed in series. Similarly, the first switch K1 and the second heating core P2 are disposed in series. Refer to FIG. 6a and FIG. 6c. One end of the first switch K1 and the first heating core P1 that are disposed in series may be connected to the negative direct current bus HV-, and the other end of the first switch K1 and the first heating core P1 that are disposed in series may be connected to any bridge arm midpoint. Similarly, one end of the first switch K1 and the second heating core P2 that are disposed in series may be connected to the negative direct current bus HV-, and the other end of the first switch K1 and the second heating core P2 that are disposed in series may be connected to any bridge arm midpoint. Refer to FIG. 6b and FIG. 6d. One end of the first switch K1 and the first heating core P1 that are disposed in series may alternatively be connected to the positive direct current bus HV+, the other end of the first switch K1 and the first heating core P1 that are disposed in series may be connected to any bridge arm midpoint. Similarly, one end of the first switch K1 and the second heating core P2 that are disposed in series may be connected to the positive direct current bus HV+, and the other end of the first switch K1 and the second heating core P2 that are disposed in series may be connected to any bridge arm midpoint. Refer to FIG. 6a and FIG. 6b. The other end of the first switch K1 and the first heating core P1 that are disposed in series and the other end of the first switch K1 and the second heating core P2 that are disposed in series may be connected to different bridge arm midpoints. Both FIG. 6a and FIG. 6b show that the other end of the first switch K1 and the first heating core P1 that are disposed in series is connected to a bridge arm midpoint of the W-phase bridge arm and the other end of the first switch K1 and the second heating core P2 that are disposed in series is connected to a bridge arm midpoint of the V-phase bridge arm. Refer to FIG. 6c and FIG. 6d. The other end of the first switch K1 and the first heating core P1 that are disposed in series and the other end of the first switch K1 and the second heating core P2 that are disposed in series may be connected to a same bridge arm midpoint, in this case, it may be considered that the first heating core P1 and the second heating core P2 are connected in parallel and then connected in series to the first switch K1. Both FIG. 6c and FIG. 6d show that the other end of the first switch K1 and the first heating core P1 that are disposed in series is connected to the bridge arm midpoint of the W-phase bridge arm and the other end of the first switch K1 and the second heating core P2 that are disposed in series is connected to the bridge arm midpoint of the W-phase bridge arm.

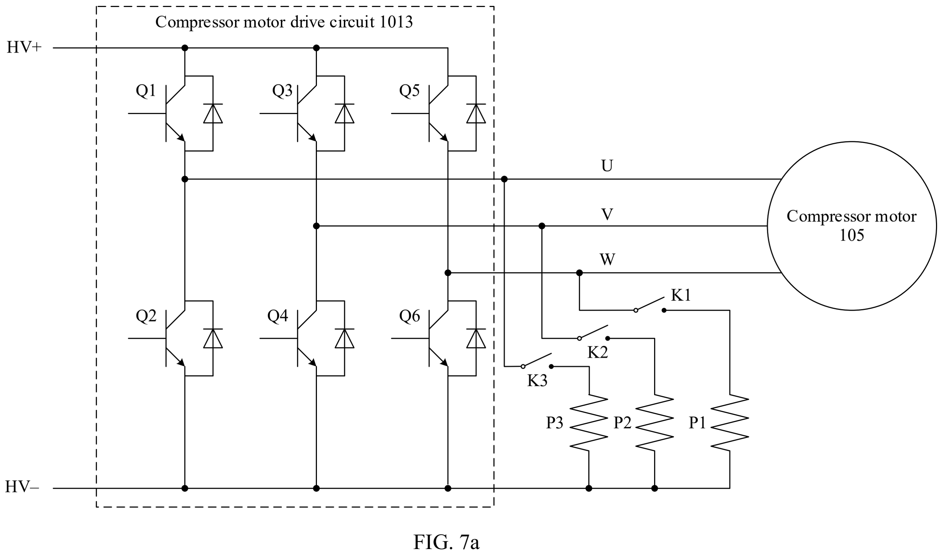

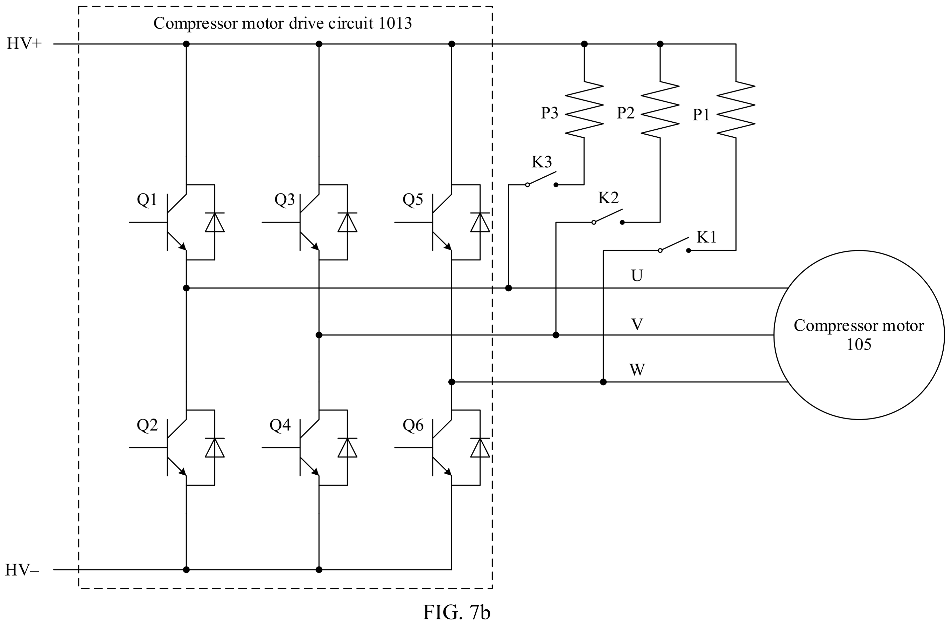

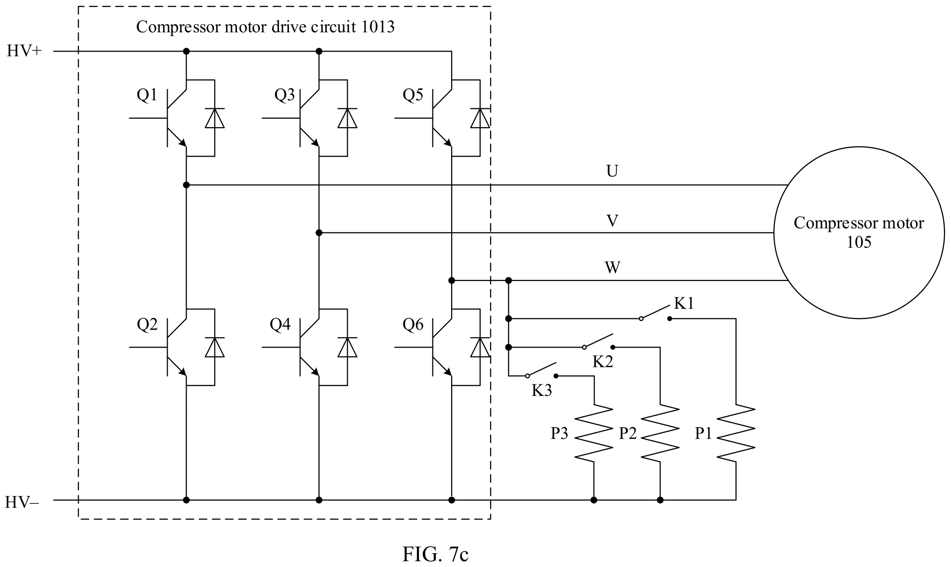

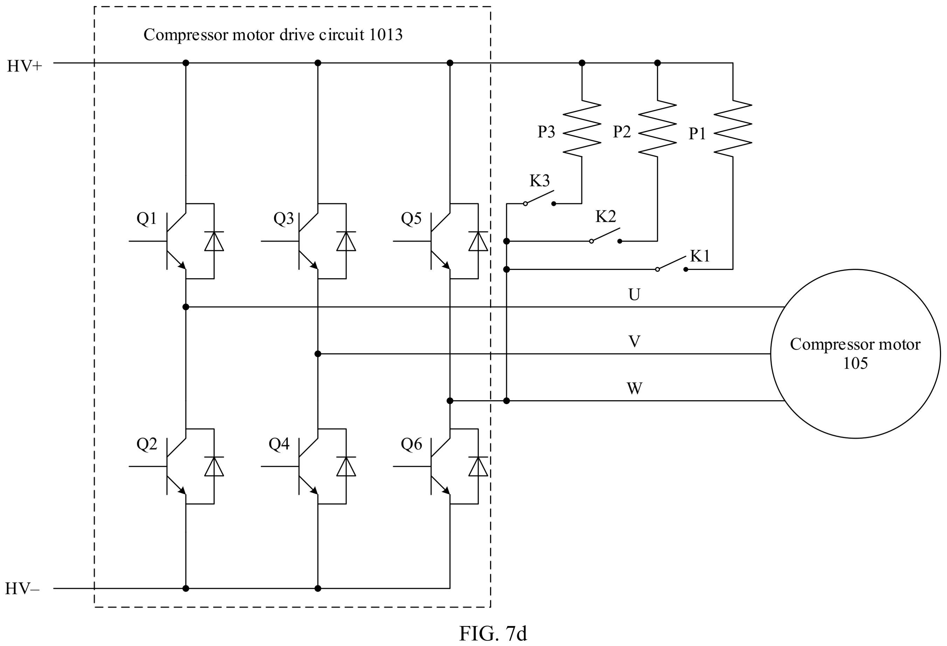

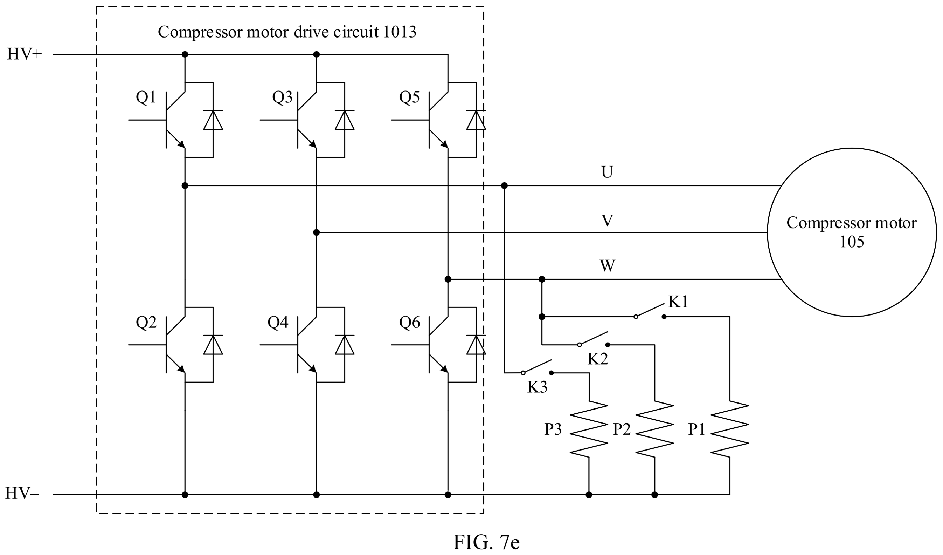

FIG. 7a is a schematic of another circuit of the motor control unit according to this embodiment of this application, FIG. 7b is a schematic of another circuit of the motor control unit according to this embodiment of this application, FIG. 7c is a schematic of another circuit of the motor control unit according to this embodiment of this application, FIG. 7d is a schematic of another circuit of the motor control unit according to this embodiment of this application, and FIG. 7e is a schematic of another circuit of the motor control unit according to this embodiment of this application. As shown in FIG. 7a to FIG. 7e, the heating module 104 connected to the motor control unit 1010 may include three heating cores, denoted as a first heating core P1, a second heating core P2, and a third heating core P3. Correspondingly, the switch module 1014 includes three switches: a first switch K1, a second switch K2, and a third switch K3. The first switch K1 and the first heating core P1 are disposed in series, the second switch K2 and the second heating core P2 are disposed in series, and the third switch K3 and the third heating core P3 are disposed in series. Refer to FIG. 7a, FIG. 7c, and FIG. 7e. One end of the first switch K1 and the first heating core P1 that are disposed in series may be connected to the negative direct current bus HV-, and the other end of the first switch K1 and the first heating core P1 that are disposed in series may be connected to any bridge arm midpoint. Similarly, one end of the second switch K2 and the second heating core P2 that are disposed in series may be connected to the negative direct current bus HV-, and the other end of the second switch K2 and the second heating core P2 that are disposed in series may be connected to any bridge arm midpoint. Similarly, one end of the third switch K3 and the third heating core P3 that are disposed in series may be connected to the negative direct current bus HV-, and the other end of the third switch K3 and the third heating core P3 that are disposed in series may be connected to any bridge arm midpoint. Refer to FIG. 7b and FIG. 7d. One end of the first switch K1 and the first heating core P1 that are disposed in series may alternatively be connected to the positive direct current bus HV+, and the other end of the first switch K1 and the first heating core P1 that are disposed in series may be connected to any bridge arm midpoint. Similarly, one end of the second switch K2 and the second heating core P2 that are disposed in series may be connected to the positive direct current bus HV+, and the other end of the second switch K2 and the second heating core P2 that are disposed in series may be connected to any bridge arm midpoint. Similarly, one end of the third switch K3 and the third heating core P3 that are disposed in series may be connected to the positive direct current bus HV+, and the other end of the third switch K3 and the third heating core P3 that are disposed in series may be connected to any bridge arm midpoint. Refer to FIG. 7a and FIG. 7b. The other end of the first switch K1 and the first heating core P1 that are disposed in series, the other end of the second switch K2 and the second heating core P2 that are disposed in series, and the other end of the third switch K3 and the third heating core P3 that are disposed in series all may be connected to different bridge arm midpoints. Both FIG. 7a and FIG. 7b show that the other end of the first switch K1 and the first heating core P1 that are disposed in series is connected to a bridge arm midpoint of the W-phase bridge arm, the other end of the second switch K2 and the second heating core P2 that are disposed in series is connected to a bridge arm midpoint of the V-phase bridge arm, and the other end of the third switch K3 and the third heating core P3 that are disposed in series is connected to a bridge arm midpoint of the U-phase bridge arm. Refer to FIG. 7c and FIG. 7d. The other end of the first switch K1 and the first heating core P1 that are disposed in series, the other end of the second switch K2 and the second heating core P2 that are disposed in series, and the other end of the third switch K3 and the third heating core P3 that are disposed in series all may be connected to a same bridge arm midpoint. Both FIG. 7c and FIG. 7d show that the other end of the first switch K1 and the first heating core P1 that are disposed in series is connected to the bridge arm midpoint of the W-phase bridge arm, the other end of the second switch K2 and the second heating core P2 that are disposed in series is connected to the bridge arm midpoint of the W-phase bridge arm, and the other end of the third switch K3 and the third heating core P3 that are disposed in series is connected to the bridge arm midpoint of the W-phase bridge arm. Refer to FIG. 7e. The other end of the first switch K1 and the first heating core P1 that are disposed in series, the other end of the second switch K2 and the second heating core P2 that are disposed in series, and the other end of the third switch K3 and the third heating core P3 that are disposed in series may be connected to partially same bridge arm midpoints. FIG. 7e shows that the other end of the first switch K1 and the first heating core P1 that are disposed in series is connected to the bridge arm midpoint of the W-phase bridge arm, the other end of the second switch K2 and the second heating core P2 that are disposed in series is connected to the bridge arm midpoint of the W-phase bridge arm, and the other end of the third switch K3 and the third heating core P3 that are disposed in series is connected to the bridge arm midpoint of the U-phase bridge arm.

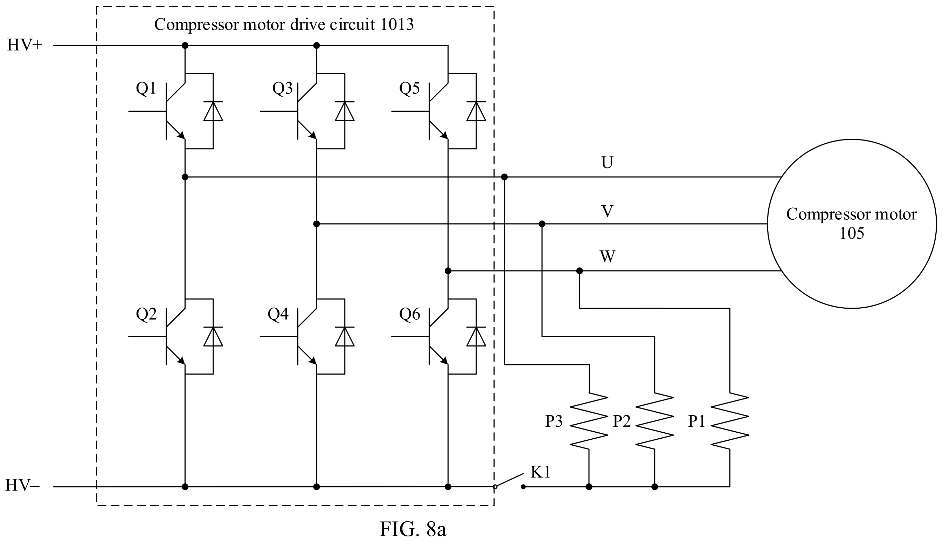

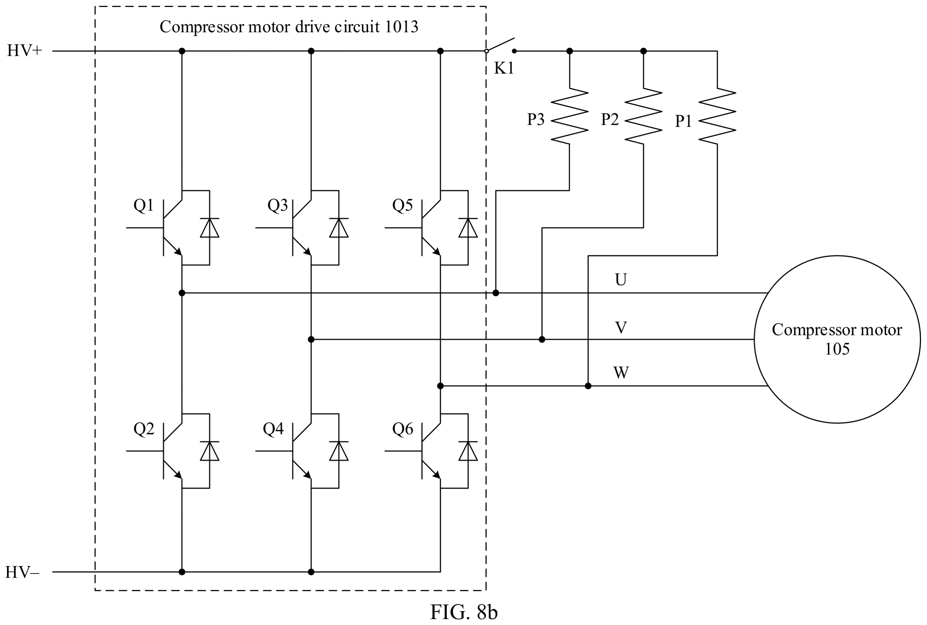

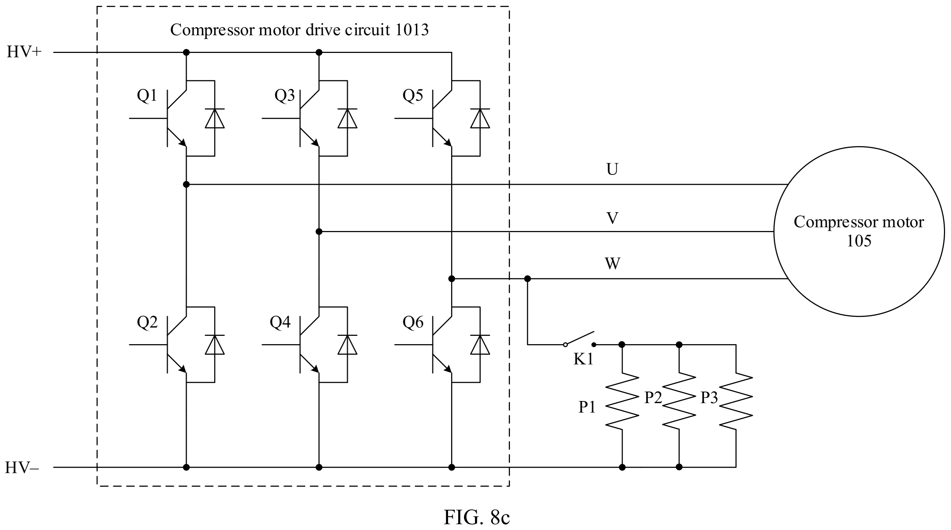

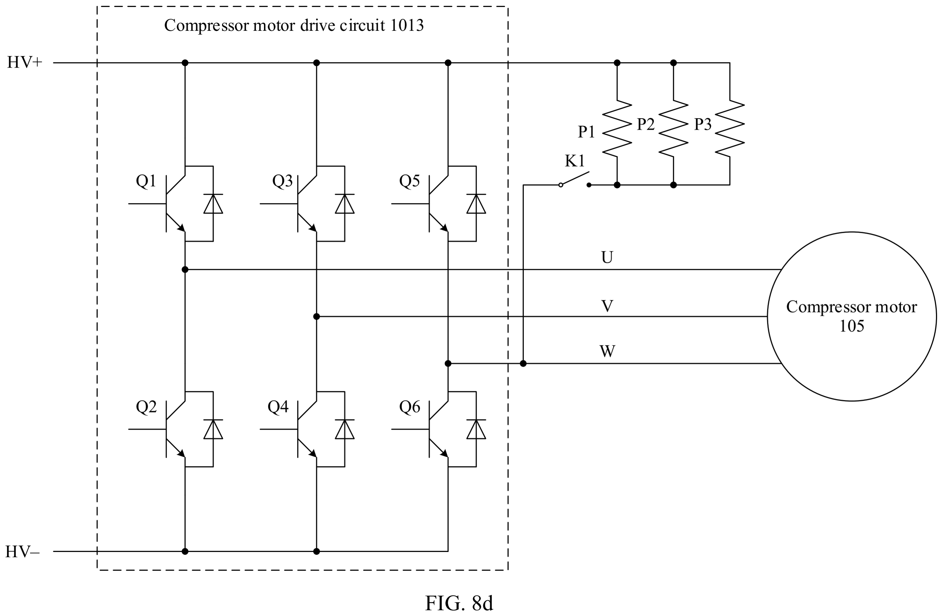

FIG. 8a is a schematic of another circuit of the motor control unit according to this embodiment of this application, FIG. 8b is a schematic of another circuit of the motor control unit according to this embodiment of this application, FIG. 8c is a schematic of another circuit of the motor control unit according to this embodiment of this application, and FIG. 8d is a schematic of another circuit of the motor control unit according to this embodiment of this application. As shown in FIG. 8a to FIG. 8d, the heating module 104 connected to the motor control unit 1010 may include three heating cores, denoted as a first heating core P1, a second heating core P2, and a third heating core P3. Correspondingly, the switch module 1014 includes one switch: a first switch K1. The first switch K1 and the first heating core P1 are disposed in series. Similarly, the first switch K1 and the second heating core P2 are disposed in series, and the first switch K1 and the third heating core P3 are disposed in series. Refer to FIG. 8a and FIG. 8c. One end of the first switch K1 and the first heating core P1 that are disposed in series may be connected to the negative direct current bus HV-, and the other end of the first switch K1 and the first heating core P1 that are disposed in series may be connected to any bridge arm midpoint. Similarly, one end of the first switch K1 and the second heating core P2 that are disposed in series may be connected to the negative direct current bus HV-, and the other end of the first switch K1 and the second heating core P2 that are disposed in series may be connected to any bridge arm midpoint. Similarly, one end of the first switch K1 and the third heating core P3 that are disposed in series may be connected to the negative direct current bus HV-, and the other end of the first switch K1 and the third heating core P3 that are disposed in series may be connected to any bridge arm midpoint. Refer to FIG. 8b and FIG. 8d. One end of the first switch K1 and the first heating core P1 that are disposed in series may alternatively be connected to the positive direct current bus HV+, the other end of the first switch K1 and the first heating core P1 that are disposed in series may be connected to any bridge arm midpoint. Similarly, one end of the first switch K1 and the second heating core P2 that are disposed in series may be connected to the positive direct current bus HV+, and the other end of the first switch K1 and the second heating core P2 that are disposed in series may be connected to any bridge arm midpoint. Similarly, one end of the first switch K1 and the third heating core P3 that are disposed in series may be connected to the positive direct current bus HV+, and the other end of the first switch K1 and the third heating core P3 that are disposed in series may be connected to any bridge arm midpoint. Refer to FIG. 8a and FIG. 8b. The other end of the first switch K1 and the first heating core P1 that are disposed in series, the other end of the first switch K1 and the second heating core P2 that are disposed in series, and the other end of the first switch K1 and the third heating core P3 that are disposed in series all may be connected to different bridge arm midpoints. Both FIG. 8a and FIG. 8b show that the other end of the first switch K1 and the first heating core P1 that are disposed in series is connected to a bridge arm midpoint of the W-phase bridge arm, the other end of the first switch K1 and the second heating core P2 that are disposed in series is connected to a bridge arm midpoint of the V-phase bridge arm, and the other end of the first switch K1 and the third heating core P3 that are disposed in series is connected to a bridge arm midpoint of the U-phase bridge arm. Refer to FIG. 8c and FIG. 8d. The other end of the first switch K1 and the first heating core P1 that are disposed in series, the other end of the first switch K1 and the second heating core P2 that are disposed in series, and the other end of the first switch K1 and the third heating core P3 that are disposed in series may be connected to a same bridge arm midpoint, in this case, it may be considered that the first heating core P1, the second heating core P2, and the third heating core P3 are connected in parallel and then connected in series to the first switch K1. Both FIG. 8c and FIG. 8d show that the other end of the first switch K1 and the first heating core P1 that are disposed in series is connected to the bridge arm midpoint of the W-phase bridge arm, the other end of the first switch K1 and the second heating core P2 that are disposed in series is connected to the bridge arm midpoint of the W-phase bridge arm, and the other end of the first switch K1 and the third heating core P3 that are disposed in series is connected to the bridge arm midpoint of the W-phase bridge arm.

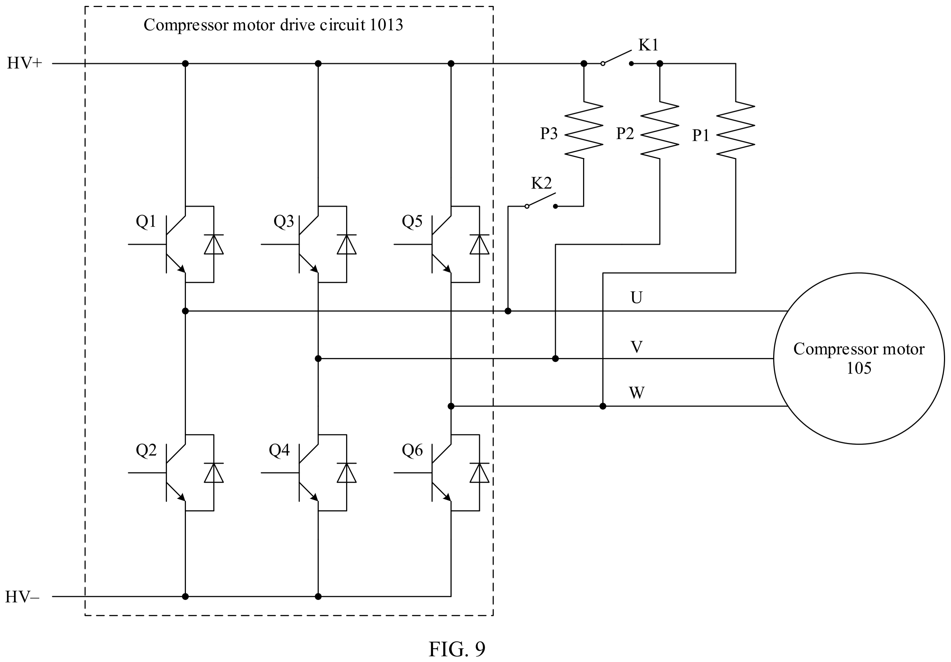

FIG. 9 is a schematic of another circuit of the motor control unit according to this embodiment of this application. As shown in FIG. 9, the heating module 104 connected to the motor control unit 1010 may include three heating cores, denoted as a first heating core P1, a second heating core P2, and a third heating core P3. Correspondingly, the switch module 1014 includes two switches: a first switch K1 and a second switch K2. The first switch K1 and the first heating core P1 are disposed in series, the first switch K1 and the second heating core P2 are disposed in series, and the second switch K2 and the third heating core P3 are disposed in series. One end of the first switch K1 and the first heating core P1 that are disposed in series may be connected to the negative direct current bus HV-, and the other end of the first switch K1 and the first heating core P1 that are disposed in series may be connected to any bridge arm midpoint. Similarly, one end of the first switch K1 and the second heating core P2 that are disposed in series may be connected to the negative direct current bus HV-, and the other end of the first switch K1 and the second heating core P2 that are disposed in series may be connected to any bridge arm midpoint. Similarly, one end of the second switch K2 and the third heating core P3 that are disposed in series may be connected to the negative direct current bus HV-, and the other end of the second switch K2 and the third heating core P3 that are disposed in series may be connected to any bridge arm midpoint. Refer to FIG. 9. One end of the first switch K1 and the first heating core P1 that are disposed in series may alternatively be connected to the positive direct current bus HV+, and the other end of the first switch K1 and the first heating core P1 that are disposed in series may be connected to any bridge arm midpoint. Similarly, one end of the first switch K1 and the second heating core P2 that are disposed in series may be connected to the positive direct current bus HV+, and the other end of the first switch K1 and the second heating core P2 that are disposed in series may be connected to any bridge arm midpoint. Similarly, one end of the second switch K2 and the third heating core P3 that are disposed in series may be connected to the positive direct current bus HV+, and the other end of the second switch K2 and the third heating core P3 that are disposed in series may be connected to any bridge arm midpoint. Refer to FIG. 9. The other end of the first switch K1 and the first heating core P1 that are disposed in series, the other end of the first switch K1 and the second heating core P2 that are disposed in series, and the other end of the second switch K2 and the third heating core P3 that are disposed in series all may be connected to different bridge arm midpoints. FIG. 9 shows that the other end of the first switch K1 and the first heating core P1 that are disposed in series is connected to a bridge arm midpoint of the W-phase bridge arm, the other end of the first switch K1 and the second heating core P2 that are disposed in series is connected to a bridge arm midpoint of the V-phase bridge arm, and the other end of the second switch K2 and the third heating core P3 that are disposed in series is connected to a bridge arm midpoint of the U-phase bridge arm. Alternatively, the other end of the first switch K1 and the first heating core P1 that are disposed in series, the other end of the first switch K1 and the second heating core P2 that are disposed in series, and the other end of the second switch K2 and the third heating core P3 that are disposed in series all may be connected to a same bridge arm midpoint. Alternatively, the other end of the first switch K1 and the first heating core P1 that are disposed in series, the other end of the first switch K1 and the second heating core P2 that are disposed in series, and the other end of the second switch K2 and the third heating core P3 that are disposed in series may be connected to partially same bridge arm midpoints, for example, the other end of the first switch K1 and the first heating core P1 that are disposed in series is connected to the bridge arm midpoint of the W-phase bridge arm, the other end of the first switch K1 and the second heating core P2 that are disposed in series is connected to the bridge arm midpoint of the W-phase bridge arm, and the other end of the second switch K2 and the third heating core P3 that are disposed in series is connected to the bridge arm midpoint of the U-phase bridge arm.

It can be learned from the foregoing description that the heating module 104 connected to the vehicle-mounted power supply apparatus 101 and the motor control unit 1010 in this application may include one, two, three, or more heating cores. A quantity of switches included in the switch module 1014 may be the same as a quantity of heating cores, so that different heating cores can be independently controlled by turning on/off switches connected in series to the heating cores. When there are two or more heating cores, a quantity of switches may be less than a quantity of heating cores, and a reduction in the quantity of switches helps reduce hardware costs. For example, one switch may be separately connected to a plurality of heating cores in series, and the plurality of heating cores are controlled together by turning on or off the switch. One end of the heating cores and the switch that are disposed in series may be connected to the negative direct current bus HV-, or one end of the heating cores and the switch that are disposed in series may be connected to the positive direct current bus HV+. When there are two or more heating cores, and the other ends of the heating cores and the switch that are disposed in series may be connected to different bridge arm midpoints, a heat generation power of a corresponding heating core can be independently adjusted by controlling duty cycles of half bridge arms connected to the different bridge arm midpoints. When there are two or more heating cores, and the other ends of the heating cores and the switch that are disposed in series may alternatively be connected to a same bridge arm midpoint, heat generation powers of the plurality of heating cores can be adjusted together by controlling duty cycles of half bridge arms connected to the same bridge arm midpoint. Optionally, the heating core included in the heating module 104 may use a positive temperature coefficient (positive temperature coefficient, PTC) resistor. Optionally, the switch included in the switch module 1014 may be a relay, a contactor, an electronic switch, or a thyristor or another half-controlled/full-controlled semiconductor component. A specific structure inside the switch is not specifically limited in this application.

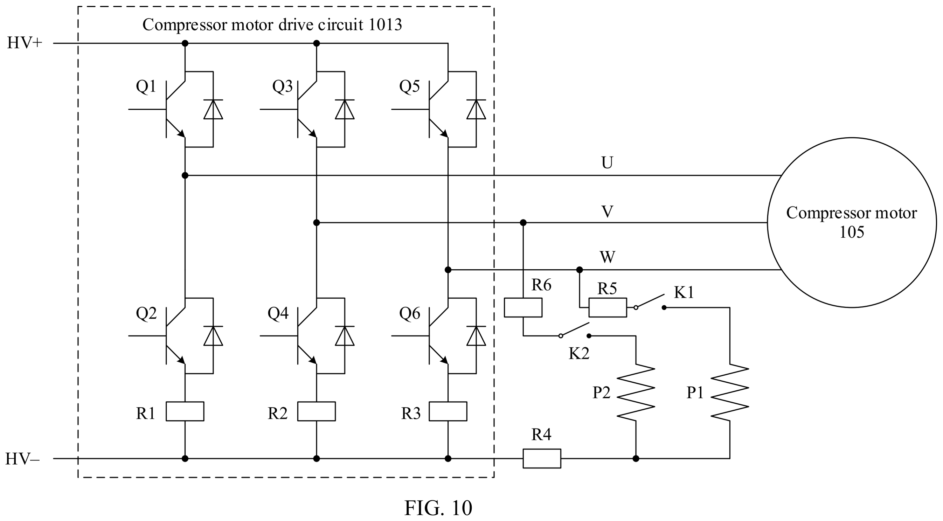

FIG. 10 is a schematic of another circuit of the motor control unit according to this embodiment of this application. As shown in FIG. 10, the motor control unit 1010 may further include a sampling circuit. The sampling circuit may implement current sampling via a resistor, a Hall effect sensor, an isolation operational amplifier, a CT, a current mirror, or the like. The sampling circuit may be disposed at any position in a line of the motor control unit 1010. There may be one or more sampling circuits. Refer to FIG. 10. A first sampling circuit R1 may be disposed between the emitter of the switching transistor Q2 and the negative direct current bus HV-, a second sampling circuit R2 may be disposed between the emitter of the switching transistor Q4 and the negative direct current bus HV-, a third sampling circuit R3 may be disposed between the emitter of the switching transistor Q6 and the negative direct current bus HV-, a fourth sampling circuit R4 may be disposed between the negative direct current bus HV- and a connection end of the first heating core P1 and the second heating core P2, a fifth sampling circuit R5 may be disposed between a first switch K1 and a bridge arm midpoint of the W-phase bridge arm, and a sixth sampling circuit R6 may be disposed between a second switch K2 and a bridge arm midpoint of the V-phase bridge arm.

According to the motor control unit and the vehicle-mounted power supply apparatus provided in embodiments of this application, a power control circuit of the compressor motor and a power control circuit of the heating module are integrated, and three phase bridge arms that are in a compressor motor drive circuit and that are for power control on the compressor motor are reused, to implement a power control function of the heating module, so that a total quantity of switching transistors in the motor control unit can be reduced. In addition, a matching circuit module or functional unit such as a freewheeling diode, a drive chip, a sampling circuit, or a heat sink can be reduced, so that an overall volume can be reduced. This helps reduce hardware costs of a product.

The motor control unit 1010 and the vehicle-mounted power supply apparatus 101 provided in embodiments of this application support a scenario in which the compressor motor is controlled to work independently, that is, the motor control unit 1010 and the vehicle-mounted power supply apparatus 101 run in the inverter mode. The motor control unit 1010 and the vehicle-mounted power supply apparatus 101 further support a scenario in which the heating module is controlled to work independently, that is, the motor control unit 1010 and the vehicle-mounted power supply apparatus 101 run in the first heating mode. The motor control unit 1010 and the vehicle-mounted power supply apparatus 101 also support a scenario in which the compressor motor and the heating module are controlled to work together, that is, the motor control unit 1010 and the vehicle-mounted power supply apparatus 101 run in the second heating mode.

In a scenario in which the compressor motor works alone, when the motor control unit 1010 and the vehicle-mounted power supply apparatus 101 run in the inverter mode, that is, the three bridge arms run in the inverter mode, switches included in the switch module 1014 are turned off, to disconnect the heating module 104 from the motor control unit 1010. In this case, the motor control unit 1010 becomes the compressor motor drive circuit including the three bridge arms, and the three bridge arms may output an alternating current to supply power to the three phase windings of the compressor motor, to drive the compressor motor. In the inverter mode, the three bridge arms provide the alternating current for the three phase windings of the compressor motor, so that the compressor motor rotates for cooling.

In a scenario in which the heating module works alone, when the motor control unit 1010 and the vehicle-mounted power supply apparatus 101 run in the first heating mode, at least one switch included in the switch module 1014 is turned on, to connect a heating core connected in series to the turned-on switch to the compressor motor drive circuit 1013. Optionally, when the compressor motor drive circuit 1013 is connected to two or more switches and heating cores, all the switches may be turned on (on), so that all the heating cores are connected to the compressor motor drive circuit 1013, or a part of the switches may be turned on (on), so that a part of the heating cores are connected to the compressor motor drive circuit 1013. For example, refer to FIG. 10. Both the first switch K1 and the second switch K2 may be turned on, so that both the first heating core P1 and the second heating core P2 are connected to the compressor motor drive circuit 1013, or only the first switch K1 may be turned on, so that the first heating core P1 is connected to the compressor motor drive circuit 1013, or only the second switch K2 may be turned on, so that the second heating core P2 is connected to the compressor motor drive circuit 1013. Correspondingly, a half bridge arm (which is one of an upper bridge switching transistor and a lower bridge switching transistor) in at least one bridge arm included in the compressor motor drive circuit 1013 is periodically turned on, so that a direct current bus, the turned-on half bridge arm, a turned-on switch, and a heating core connected in series form a heating loop, and the heating core in the heating loop generates heat. For example, refer to FIG. 10. When both the first switch K1 and the second switch K2 are turned on, a switching transistor Q3 and a switching transistor Q5 are periodically turned on, so that a direct current bus, the switching transistor Q3, the second switch K2, and the second heating core P2 form a heating loop, the direct current bus, the switching transistor Q5, the first switch K1, and the first heating core P1 form a heating loop, and the first heating core P1 and the second heating core P2 generate heat. When only the first switch K1 is turned on, the switching transistor Q5 is periodically turned on, so that the direct current bus, the switching transistor Q5, the first switch K1, and the first heating core P1 form a heating loop, and the first heating core P1 generates heat. When only the second switch K2 is turned on, the switching transistor Q3 is periodically turned on, so that the direct current bus, the switching transistor Q3, the second switch K2, and the second heating core P2 form a heating loop, and the second heating core P2 generates heat. In addition, because a heating core and a lead usually have a specific parasitic inductance, when the periodically turned-on half bridge arm is turned off, a body diode of the other half bridge arm in the same bridge arm may be configured to freewheel the parasitic inductance, to prevent a switching transistor of the half bridge arm from being out of a turn-off stress. Because only the half bridge arm in the at least one bridge arm is controlled to be periodically turned on, a direct current is not converted into an alternating current, and the compressor motor does not work.

Optionally, when a heating core works alone, a heat generation power of a heating core that needs to work may be controlled by controlling a half bridge arm that forms a heating loop with the heating core that needs to work to be turned on or off. Usually, based on combining of a pulse width modulation (pulse width modulation, PWM) technology or combining of a technology of adjusting a switching period based on a fixed on time, on duration and off duration of the half bridge arm can be adjusted.

Optionally, when there are two or more heating cores, and the other ends of the heating cores and the switch that are disposed in series are connected to different bridge arm midpoints, a heat generation power of a corresponding heating core can be independently adjusted by controlling duty cycles of turn-on of half bridge arms connected to the different bridge arm midpoints. For example, refer to FIG. 10. When the heating core works alone, a heat generation power of the first heating core P1 and a heat generation power of the second heating core P2 can be independently adjusted by controlling duty cycles of turn-on of the switching transistor Q3 and the switching transistor Q5. Further, switches connected in series to the heating cores may be controlled to be periodically turned on, and the heat generation power is controlled in a wider range by controlling duty cycles of turn-on of different switches. In addition, a turn-on frequency of the switch connected in series to each heating core is generally lower than a turn-on frequency of the switching transistor in the bridge arm. To be specific, the switching transistor in the bridge arm is controlled by using a high-frequency PWM signal, and the switch connected in series to each heating core is controlled by using a low-frequency PWM signal. For example, refer to FIG. 10. The switching transistor Q3 and the switching transistor Q5 are controlled by using a high-frequency PWM signal, and the first switch K1 and the second switch K2 are controlled by using a low-frequency PWM signal. Alternatively, switches connected in series to the heating cores may be controlled to be intermittently turned on, that is, the heating core is controlled to generate heat in one period of time and stop generating heat in another period of time. Switching duration of intermittent turn-on mentioned herein is longer than switching duration of periodic turn-on.

Optionally, when there are two or more heating cores, and the other ends of the heating cores and the switch that are disposed in series are connected to a same bridge arm midpoint, to independently adjust heat generation powers of the plurality of heating cores, the switches connected in series to the heating cores may be controlled to be periodically turned on. In addition, differentiated control on heat generation powers of different heating cores is implemented through controlling duty cycles of turn-on of different switches. Duration in which the switch module is turned on in each period is positively correlated with a target heating power of the heating module. For example, refer to FIG. 7d. When the heating core works alone, differentiated control on heat generation powers of the first heating core P1, the second heating core P2, and the third heating core P3 can be implemented through controlling duty cycles of turn-on of the first switch K1, the second switch K2, and the third switch K3. In addition, a turn-on frequency of the switch connected in series to each heating core is generally lower than a turn-on frequency of the switching transistor in the bridge arm. To be specific, the switching transistor in the bridge arm is controlled by using a high-frequency PWM signal, and the switch connected in series to each heating core is controlled by using a low-frequency PWM signal. For example, refer to FIG. 7d. A switching transistor Q6 is controlled by using a high-frequency PWM signal, and the first switch K1, the second switch K2, and the third switch K3 are controlled by using a low-frequency PWM signal.

In a scenario in which the compressor motor and the heating module work together, for example, the compressor motor is in a heat pump state, a heat pump and the heating module work together to heat an entire vehicle, and when the motor control unit 1010 runs in the second heating mode, at least one switch included in the switch module 1014 is turned on, to connect a heating core connected in series to the turned-on switch to the compressor motor drive circuit 1013. Optionally, when the compressor motor drive circuit 1013 is connected to two or more switches and heating cores, all the switches may be turned on (on), so that all the heating cores are connected to the compressor motor drive circuit 1013, or a part of the switches may be turned on (on), so that a part of the heating cores are connected to the compressor motor drive circuit 1013. For example, refer to FIG. 10. Both the first switch K1 and the second switch K2 may be turned on, so that both the first heating core P1 and the second heating core P2 are connected to the compressor motor drive circuit 1013, or only the first switch K1 may be turned on, so that the first heating core P1 is connected to the compressor motor drive circuit 1013, or only the second switch K2 may be turned on, so that the second heating core P2 is connected to the compressor motor drive circuit 1013. Correspondingly, the compressor motor drive circuit 1013 may run in the inverter mode, and the three bridge arms may output an alternating current to supply power to the three phase windings of the compressor motor. In the inverter mode, the three bridge arms provide an alternating current for the three phase windings of the compressor motor, so that the compressor motor rotates the heat pump to work.

Optionally, in a scenario in which the compressor motor works alone and a scenario in which the compressor motor and the heating module work together, when the three bridge arms run in the inverter mode, a direct current may be converted into an alternating current, and the alternating current is provided for the compressor motor. Usually, based on combining of a single-phase sinusoidal pulse width modulation (sinusoidal pulse width modulation, SPWM) technology or combining of a space vector pulse modulation (space vector pulse width modulation, SVPWM) technology, the three bridge arms can convert a direct current into an alternating current. A manner in which the three bridge arms convert the direct current into the alternating current is not specifically limited in embodiments of this application.

The following explains, according to an SVPWM control policy, how to independently adjust a heat generation power of the heating module while controlling the three bridge arms to run in the inverter mode.

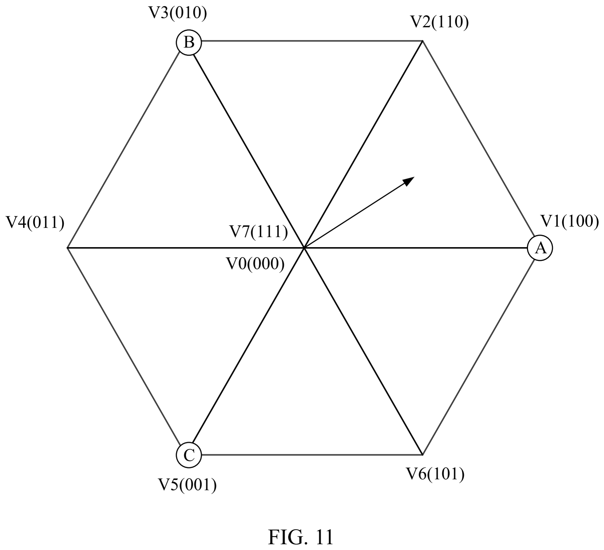

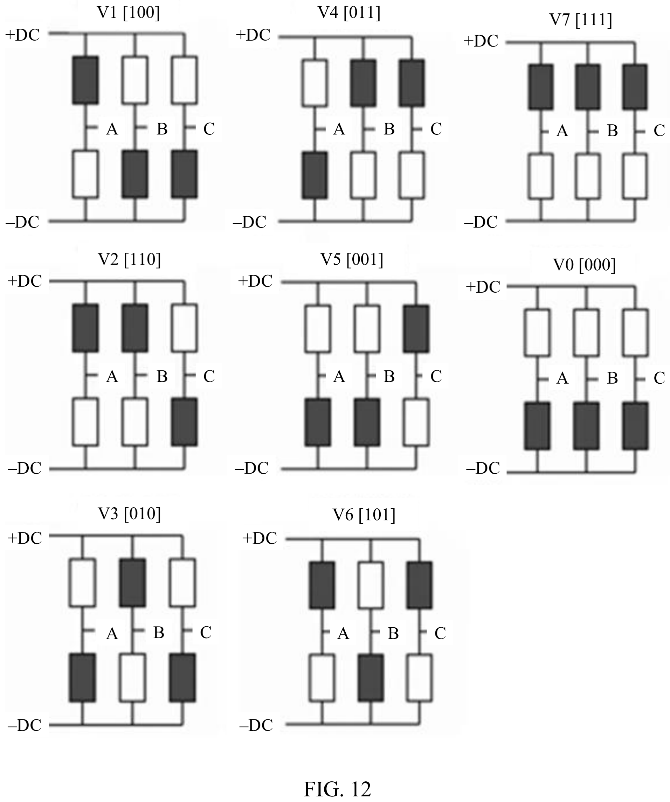

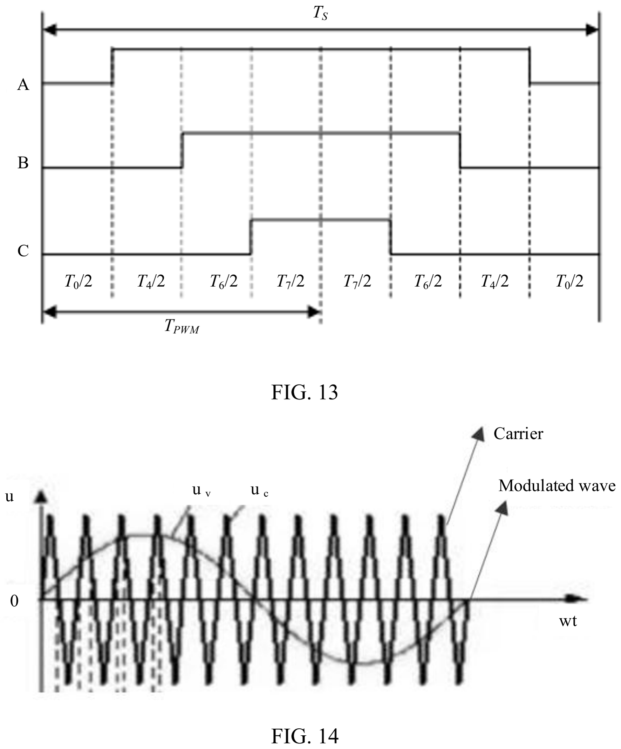

FIG. 11 is a diagram of a space vector in an SVPWM technology, FIG. 12 is a diagram of correspondences between space vectors and on/off states of switching transistors in three phase bridge arms, FIG. 13 is a diagram of a status of each phase bridge arm and a control signal of each switching transistor in the phase bridge arm, and FIG. 14 is a diagram of a wave generation control policy of SVPWM. As shown in FIG. 11, eight space vectors are set in the SVPWM technology, and are zero vectors V0(000) and V7(111) and basic voltage vectors V1(100), V2(110), V3(010), V4(011), V5(001) and V6(101). Each space vector represents a status of upper bridge switching transistors of three phase bridge arms. In each space vector, "0" represents that the switching transistor is off, and "1" represents that the switching transistor is on. For example, if the space vector V1 is 100, it represents that a state of a U-phase upper bridge switching transistor is on, a state of a V-phase upper bridge switching transistor is off, and a state of a W-phase upper bridge switching transistor is off. As shown in FIG. 12, in the SVPWM technology, a state of an upper bridge switching transistor of one bridge arm is opposite to a state of a lower bridge switching transistor of the bridge arm, that is, in one bridge arm, when an upper bridge switching transistor is in an on state, a lower bridge switching transistor is in an off state, or when a lower bridge switching transistor is in an on state, an upper bridge switching transistor is in an off state. A, B, and C in FIG. 11 and FIG. 12 correspond to a U phase, a V phase, and a W phase, respectively. A control concept of the SVPWM is to equate an equal-amplitude sinusoidal voltage whose difference between three phases is 120° to a rotating voltage space vector. As shown by an arrow in FIG. 11, the voltage space vector falls on one of six sectors at any moment during rotation, and may be formed by superposing two basic voltage vectors and two zero vectors that are adjacent to the sector. The two zero vectors V0(000) and V7(111) respectively correspond to two circuit states. V0(000) corresponds to that all three lower bridge switching transistors are turned on, V7(111) corresponds to that all three upper bridge switching transistors are turned on, and results generated by V0(000) and V7(111) during control on the compressor motor are the same. In a conventional SVPWM control policy, vectors V0(000) and V7(111) are equally divided, that is, T0=T7 in FIG. 13. A state represented in the compressor motor drive circuit 1013 is that a time at which the switching transistor Q1, the switching transistor Q3, and the switching transistor Q5 all are turned on is the same as a time at which the switching transistor Q2, the switching transistor Q4, and the switching transistor Q6 all are turned on. Refer to FIG. 14. An average value of modulated waves of the three bridge arms is equal to an average value of carriers.

V0(000) and V7(111) are equivalent in control on the compressor motor, but are different in control on the heating module. When one end of a heating core and a switch that are disposed in series is connected to a negative direct current bus HV-, a higher proportion of V7(111) indicates a longer time during which all the three upper bridge switching transistors are turned on, a longer working time of the heating core, and a higher heat generation power. When one end of a heating core and a switch that are disposed in series is connected to a positive direct current bus HV+, a higher proportion of V0(000) indicates a longer time during which all the three lower bridge switching transistors are turned on, a longer working time of the heating core, and a higher heat generation power. Therefore, in addition to the conventional SVPWM control policy, proportions of V0(000) and V7(111) may be further controlled, to control the heat generation power of the heating core, so that the control on the heat generation power of the heating core is decoupled from the control on the compressor motor. Therefore, when the motor control unit runs in the second heating mode, a proportion of a time in which all upper bridge arms in the three bridge arms are turned on and a proportion of a time in which all lower bridge arms in the three bridge arms are turned on may be changed, to make the proportion of the time in which all the upper bridge arms are turned on to be different from the proportion of the time in which all the lower bridge arms are turned on, so as to control the heat generation power of the heating core. Specifically, changing the proportion of V0(000)/V7(111) may be equivalent to adjusting the average value of the modulated waves. A larger proportion of V0(000) indicates a smaller average value of the modulated waves, and the proportion of the time in which all the three lower bridge switching transistors are turned on is increased; and a larger proportion of V7(111) indicates a larger average value of the modulated waves, and the time in which all the three upper bridge switching transistors are turned on is prolonged.

The foregoing uses only an SVPWM control solution as an example to describe how to independently control the compressor motor and the heating module. Same control effect can also be achieved by using another wave generation solution. For example, all reference values of three phase modulated waves may be increased or decreased, and an equivalent result generated is also that the proportion of the time in which all the three lower bridge switching transistors or all the three upper bridge switching transistors are turned on is increased. Therefore, this application is not limited to a specific control policy, and only a final adjustment and control result of the proportion of the time in which all the upper bridge switching transistors or all the lower bridge switching transistors are turned on needs to be focused on.

Optionally, when there are two or more heating cores, to independently adjust heat generation powers of a plurality of heating cores, switches connected in series to the heating cores may be controlled to be periodically turned on. In addition, differentiated control on heat generation powers of different heating cores is implemented through controlling duty cycles of turn-on of different switches. For example, refer to FIG. 10. When the compressor motor and the heating module work together, differentiated control on heat generation powers of the first heating core P1 and the second heating core P2 may be implemented through controlling duration in which the first switch K1 is turned on and duration in which the second switch K2 is turned on. In addition, a turn-on frequency of the switch connected in series to each heating core is generally lower than a turn-on frequency of the switching transistor in the bridge arm. To be specific, the switching transistor in the bridge arm is controlled by using a high-frequency PWM signal, and the switch connected in series to each heating core is controlled by using a low-frequency PWM signal.

Based on a same inventive concept, an embodiment of this application further provides a powertrain. The powertrain includes a compressor motor, a heating module, and the foregoing vehicle-mounted power supply apparatus or the motor control unit. A compressor motor drive circuit in the vehicle-mounted power supply apparatus or the motor control unit includes three bridge arms connected in parallel, bridge arm midpoints of the three bridge arms are configured to connect to three phase windings of the compressor motor, and a bridge arm midpoint of at least one bridge arm is connected to one end of the three bridge arms via a switch module and the heating module that are connected in series. In this way, a power control circuit of the compressor motor and a power control circuit of the heating module are integrated, and the three phase bridge arms that are in the compressor motor drive circuit and that are for power control on the compressor motor are reused, to implement a power control function of the heating module, so that a total quantity of switching transistors in the powertrain can be reduced. In addition, a matching circuit module or functional unit such as a freewheeling diode, a drive chip, a sampling circuit, or a heat sink can be reduced, so that an overall volume can be reduced. This helps reduce hardware costs of a product.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An all-in-one vehicle-mounted power supply apparatus, wherein the vehicle-mounted power supply apparatus comprises a housing, a power conversion circuit, a switch module, and a compressor motor drive circuit, the housing is configured to accommodate the switch module, the power conversion circuit, and the compressor motor drive circuit, a compressor motor interface and a heating module interface are disposed on a surface of the housing, the power conversion circuit is configured to receive an alternating current and output a first direct current to charge a power battery or supply power to the compressor motor drive circuit, and the compressor motor drive circuit comprises three bridge arms connected in parallel; and
two ends of the three bridge arms are configured to receive the first direct current or receive power supplied by the power battery, a bridge arm midpoint of each bridge arm is configured to connect to one phase winding of a compressor motor through the compressor motor interface, a bridge arm midpoint of at least one bridge arm is configured to drive a heating module through the heating module interface, and the switch module is configured to connect or disconnect the bridge arm midpoint of the at least one bridge arm to/from the heating module.

2. The vehicle-mounted power supply apparatus according to claim 1, wherein the heating module comprises a plurality of heating cores connected in parallel; and
one end of each heating core is configured to connect to a bridge arm midpoint of one bridge arm, and the other end of each heating core is configured to connect to one end of the three bridge arms via the switch module; or
the switch module comprises a plurality of switches in a one-to-one correspondence with the plurality of heating cores, one end of each heating core is configured to correspondingly connect to a bridge arm midpoint of one bridge arm via one switch, and the other end of each heating core is configured to connect to one end of the three bridge arms.

3. The vehicle-mounted power supply apparatus according to claim 1 or 2, wherein the heating module comprises the plurality of heating cores connected in parallel, one end of the plurality of heating cores is configured to connect to the bridge arm midpoint of the one bridge arm, and the other end of the plurality of heating cores is configured to connect to the one end of the three bridge arms.

4. The vehicle-mounted power supply apparatus according to claim 3, wherein the switch module comprises the plurality of switches in the one-to-one correspondence with the plurality of heating cores, and the one end of each heating core is configured to connect to the bridge arm midpoint of the one bridge arm via the one switch, or the other end of each heating core is configured to connect to the one end of the three bridge arms via one switch.

5. The vehicle-mounted power supply apparatus according to any one of claims 1 to 4, wherein a running mode of the vehicle-mounted power supply apparatus comprises a first heating mode, a second heating mode, and an inverter mode, wherein
when the vehicle-mounted power supply apparatus runs in the inverter mode, the switch module is turned off, and the bridge arm midpoints of the three bridge arms are configured to output the second alternating current to drive the compressor motor;
when the vehicle-mounted power supply apparatus runs in the first heating mode, the switch module is turned on, the compressor motor drive circuit is configured to supply power to the heating module, and the compressor motor drive circuit does not output the second alternating current; or
when the vehicle-mounted power supply apparatus runs in the second heating mode, the switch module is turned on, the compressor motor drive circuit is configured to supply power to the heating module, and the bridge arm midpoints of the three bridge arms are configured to output the second alternating current to drive the compressor motor.

6. The vehicle-mounted power supply apparatus according to claim 5, wherein when the vehicle-mounted power supply apparatus runs in the first heating mode or the second heating mode, the switch module is intermittently turned on.

7. The vehicle-mounted power supply apparatus according to claim 5, wherein when the vehicle-mounted power supply apparatus runs in the first heating mode or the second heating mode, the switch module is periodically turned on.

8. The vehicle-mounted power supply apparatus according to claim 7, wherein duration in which the switch module is turned on in each period is positively correlated with a target heating power of the heating module.

9. The vehicle-mounted power supply apparatus according to any one of claims 6 to 8, wherein when the vehicle-mounted power supply apparatus runs in the second heating mode, in a process in which the bridge arm midpoints of the three bridge arms output the second alternating current, duration in which all upper bridge arms in the three bridge arms are turned on is different from duration in which all lower bridge arms in the three bridge arms are turned on.

10. The vehicle-mounted power supply apparatus according to any one of claims 1 to 9, wherein the vehicle-mounted power supply apparatus comprises a drive motor drive circuit, the drive motor drive circuit is configured to receive power supplied by the power battery and output a third alternating current, and the third alternating current is used to drive a drive motor of the electric vehicle.

11. A motor control unit for an electric vehicle, comprising a compressor motor drive circuit and a switch module, wherein the compressor motor drive circuit comprises three bridge arms connected in parallel, two ends of the three bridge arms are configured to receive a direct current or receive power supplied by a power battery, a bridge arm midpoint of each bridge arm is configured to connect to one phase winding of a compressor motor, a bridge arm midpoint of at least one bridge arm is configured to drive a heating module, and the switch module is configured to connect or disconnect the bridge arm midpoint of the at least one bridge arm to/from the heating module.

12. The motor control unit according to claim 11, wherein the heating module comprises a plurality of heating cores connected in parallel, one end of each heating core is configured to connect to a bridge arm midpoint of one bridge arm, and the other end of each heating core is configured to connect to one end of the three bridge arms via the switch module; or
the switch module comprises a plurality of switches in a one-to-one correspondence with the plurality of heating cores, one end of each heating core is configured to correspondingly connect to a bridge arm midpoint of one bridge arm via one switch, and the other end of each heating core is configured to connect to one end of the three bridge arms.

13. The motor control unit according to claim 12, wherein the heating module comprises the plurality of heating cores connected in parallel, one end of the plurality of heating cores is configured to connect to the bridge arm midpoint of the one bridge arm, and the other end of the plurality of heating cores is configured to connect to the one end of the three bridge arms.

14. The motor control unit according to claim 13, wherein the switch module comprises the plurality of switches in the one-to-one correspondence with the plurality of heating cores, and the one end of each heating core is configured to connect to the bridge arm midpoint of the one bridge arm via the one switch, or the other end of each heating core is configured to connect to the one end of the three bridge arms via one switch.

15. The motor control unit according to any one of claims 11 to 14, wherein a running mode of the motor control unit comprises a first heating mode, a second heating mode, and an inverter mode, wherein
when the motor control unit runs in the inverter mode, the switch module is turned off, and the bridge arm midpoints of the three bridge arms are configured to output the alternating current to drive the compressor motor;
when the motor control unit runs in the first heating mode, the switch module is turned on, the compressor motor drive circuit is configured to supply power to the heating module, and the compressor motor drive circuit does not output the alternating current; or
when the motor control unit runs in the second heating mode, the switch module is turned on, the compressor motor drive circuit is configured to supply power to the heating module, and the bridge arm midpoints of the three bridge arms are configured to output the alternating current to drive the compressor motor.

16. A powertrain, wherein the powertrain comprises a compressor motor, a heating module, and the vehicle-mounted power supply apparatus according to any one of claims 1 to 10 or the motor control unit according to any one of claims 11 to 15, the compressor motor drive circuit comprises three bridge arms connected in parallel, a bridge arm midpoint of each bridge arm is configured to connect to one phase winding of the compressor motor, a bridge arm midpoint of at least one bridge arm is configured to drive the heating module, and the switch module is configured to connect or disconnect the bridge arm midpoint of the at least one bridge arm to/and the heating module.
